# EUROPEAN PATENT SPECIFICATION

(11) **EP 3 355 746 B1**
(45) Date of publication and mention of the grant of the patent: **04.11.2020**
(21) Application number: 16852154.0
(22) Date of filing: 23.09.2016
(51) Int. Cl.: A47C 27/14, A47C 27/16, A61G 5/10, A47C 7/46, A47C 31/12

(54) **CONTOURING SYSTEM AND COMPONENTS**
KONTURIERUNGSSYSTEM UND KOMPONENTEN
SYSTÈME ET COMPOSANTS PERMETTANT DE DONNER DU GALBE

(30) Priority: 30.09.2015 AU 2015903974
(43) Date of publication of application: 08.08.2018
(73) Proprietor: Mascull, Roger Thomas, Rolleston 7675 (NZ); Mascull, Elizabeth Jocelyn, Rolleston 7675 (NZ)
(72) Inventor: MASCULL, Roger Thomas, Rolleston 7675 (NZ)
(74) Representative: Mewburn Ellis LLP
(86) International application number: PCT/NZ2016/050155
(87) International publication number: WO 2017/058029

(56) References cited:
- FR-A1- 2 255 880
- US-A- 4 484 778
- US-A- 5 101 811
- US-A1- 2011 048 429
- US-A1- 2012 131 752
- US-B1- 8 875 328
- US-B2- 7 805 791

## Description

### FIELD OF INVENTION

This invention relates to a contouring system and components for contouring a surface of a seat or mattress.

### BACKGROUND

Seating users, and particularly wheelchair users, may be required to be seated for extended periods. It is important that in a wheelchair, the wheelchair seating provides sufficient padding for comfort and to assist in preventing injuries associated with being seated for long periods. It is also helpful if wheelchair seating can be customised to meet the requirements of individual wheelchair users, especially high needs users of wheelchairs who may also require contoured seating to assist with their positioning in a wheelchair. For example, asymmetric seating may be necessary to encourage some users to sit as comfortably upright as possible.

It is known to provide contoured seats for wheelchairs. However, such seats are typically manufactured on a case by case basis, meaning that each seat is made for the individual needs of its user. The resulting seat is labour intensive and is typically expensive. Another drawback of bespoke manufacturing of wheelchair seats is that the user's needs can change over time due to growth (especially in the case of a child) or a change in posture. The user may then require another wheelchair seat to be made especially for his or her needs and must wait while the seat is being manufactured.

US7805791B2 discloses sectional element mat.

US 2011/048429A1 discloses patient positioning apparatus.

US 8875328B1 discloses pediatric head positioner.

FR 2255880A1 discloses a ventilating cover or mat.

It is an object of the present invention to provide a contouring system that goes at least some way towards overcoming the disadvantages of the prior art or to at least provide a useful alternative to known contouring systems.

It is also an object of the present invention to provide components for the contouring system of the invention.

### SUMMARY OF INVENTION

In a first aspect, the invention provides a contouring system for use in a backrest of a chair as set forth in claim 1.

The term "comprising" and derivatives thereof, such as "comprise" and "comprises", if and when used herein in relation to a combination of features should not be taken as excluding the possibility that the combination may have further unspecified features. For example, a statement that an arrangement "comprises" certain parts does not mean that it cannot also, optionally, have additional parts. In other words, the terms "comprises", "comprising", and similar words, are not to be interpreted in an exclusive or exhaustive sense. Instead, they are intended to mean "including, but not limited to.

Any reference to prior art documents in this specification is not to be considered an admission that such prior art is widely known or forms part of the common general knowledge in the field.

### BRIEF DESCRIPTION OF THE DRAWINGS

Preferred forms of the invention will now be described by way of example only and with reference to the accompanying drawings, in which:
Figure 1 is a front view of one form of support element according to the invention;
Figure 2a is a plan view of a circular contouring unit according to one form of the invention;
Figure 2b is a plan view of a set of four of the contouring units of the form shown in Figure 2a;
Figure 3a is a plan view of a substantially square shaped contouring unit according to one form of the invention;
Figure 3b is a plan view of a set of four of the contouring units of the form shown in Figure 3a;
Figure 4a is a plan view of octagonal shaped contouring unit according to one form of the invention;
Figure 4b is a plan view of a set of four of the contouring units of the form shown in Figure 4a;
Figure 5a is a plan view of a hexagonal shaped contouring unit according to one form of the invention;
Figure 5b is a plan view of a set of four hexagonal shaped contouring units of the form shown in Figure 5a;
Figure 6a is a plan view of a triangular shaped contouring unit according to one form of the invention;
Figure 6b is a plan view of a set of eight triangular shaped contouring units of the form shown in Figure 6a;
Figure 7a is a plan view of a substantially rectangular shaped contouring unit with two angled corners and a substantially centrally located attachment aperture;
Figure 7b is a plan view of a set of four contouring units of the form shown in Figure 7a;
Figure 8a is a plan view of a substantially rectangular shaped contouring unit with two angled corners;

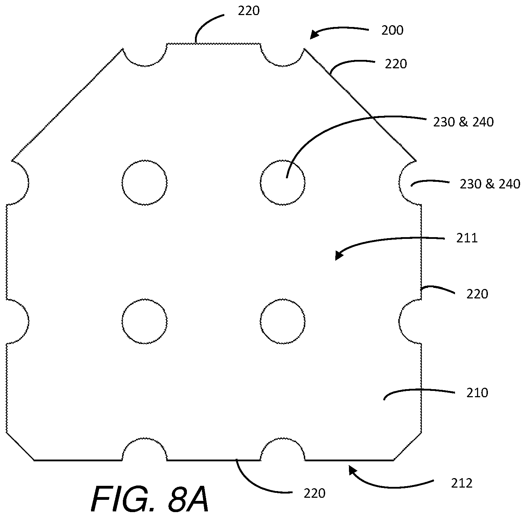

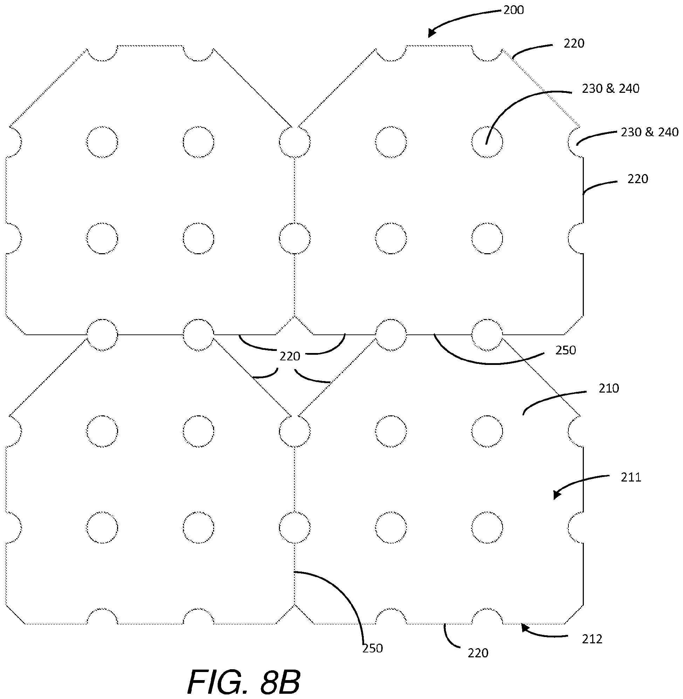

Figure 8a is a plan view of a set of four contouring units of the form shown in Figure 8a;

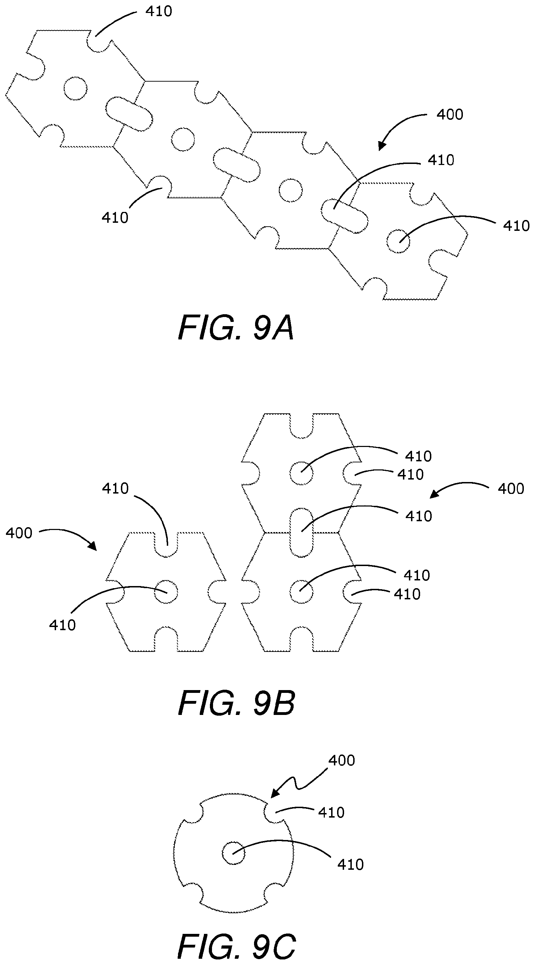

Figure 9a is a plan view of one form of stabiliser according to the invention, where the stabiliser is an elongate strip of material;

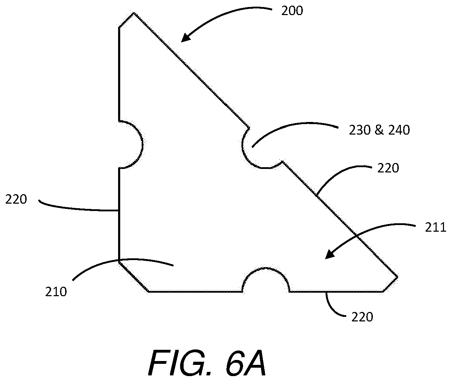

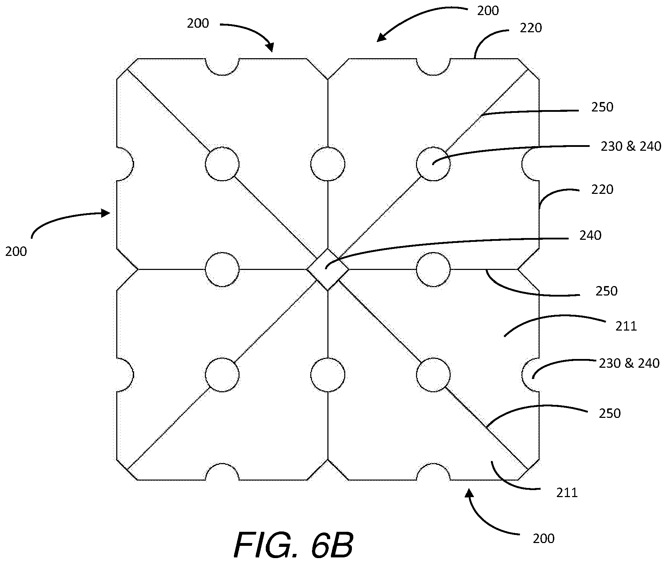

Figure 9b is a plan view of the stabiliser of Figure 6a where portions of the stabilizer have been broken away to form smaller stabilisers;
Figure 9c is a plan view of another form of stabiliser according to the invention;

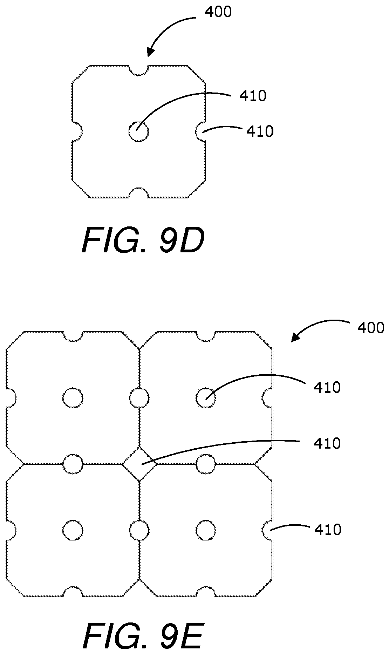

Figure 9d is a plan view of yet another form of stabiliser according to the invention;
Figure 9e is a plan view of a set of four stabilisers of the form shown in Figure 6d;

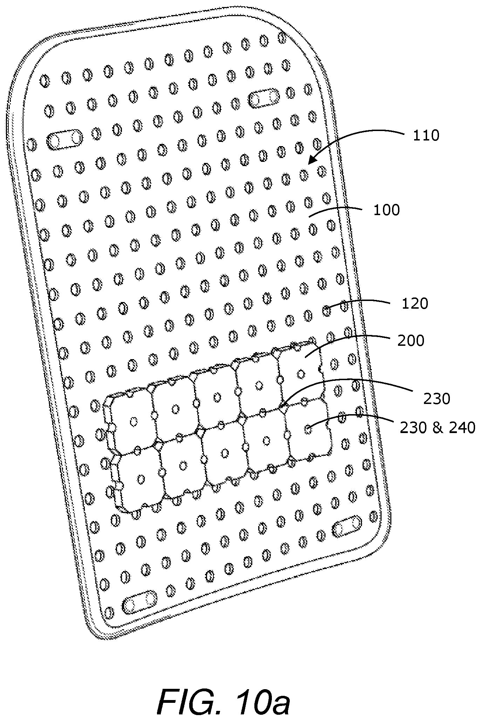

Figure 10a is an isometric view of a support element to be used as a contoured backrest, where contouring units are attached to the lumbar region of the support element to build the foundation of a lumbar support;

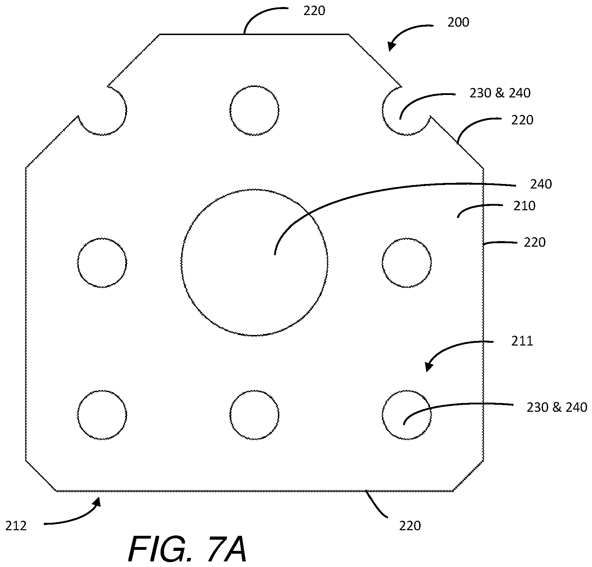

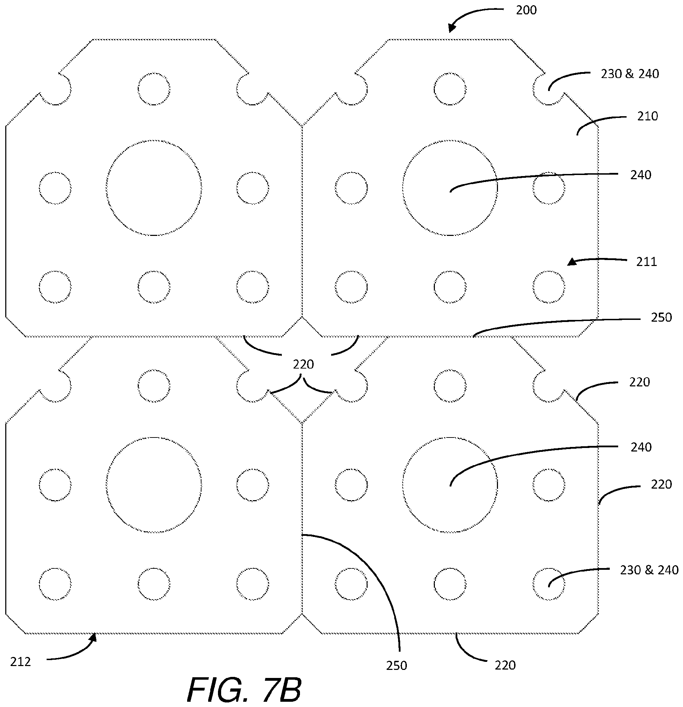

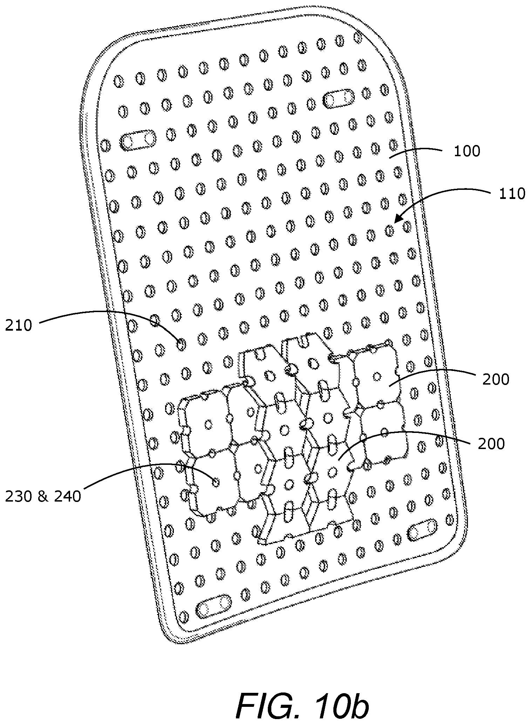

Figure 10b is an isometric view of the support element of Figure 7 where further contouring units have been attached to the lumbar region of the support element;

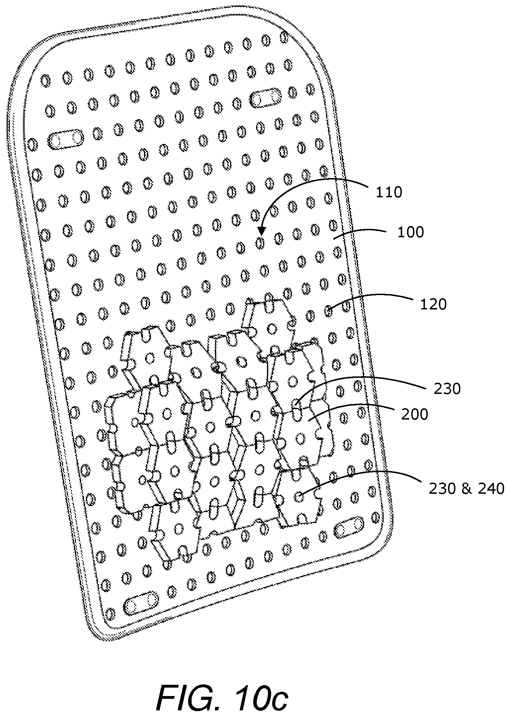

Figure 10c is an isometric view of the support element of Figure 7 where more contouring units have been attached to the lumbar region of the support element;

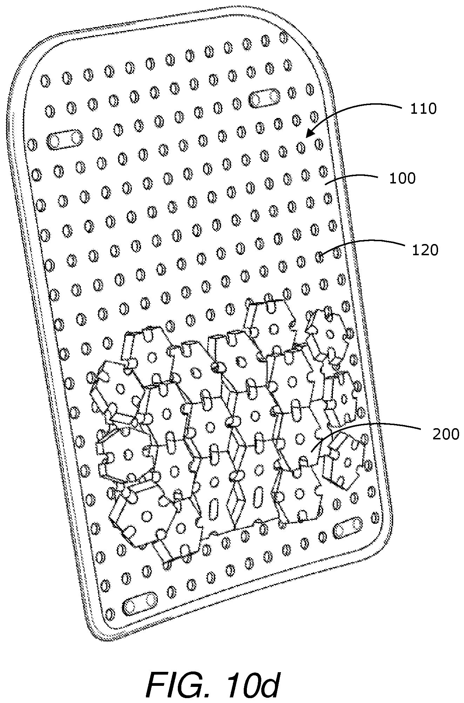

Figure 10d is an isometric view of the support element of Figure 7 where even more contouring units have been attached to the lumbar region of the support element to build up the contours of the lumbar support;

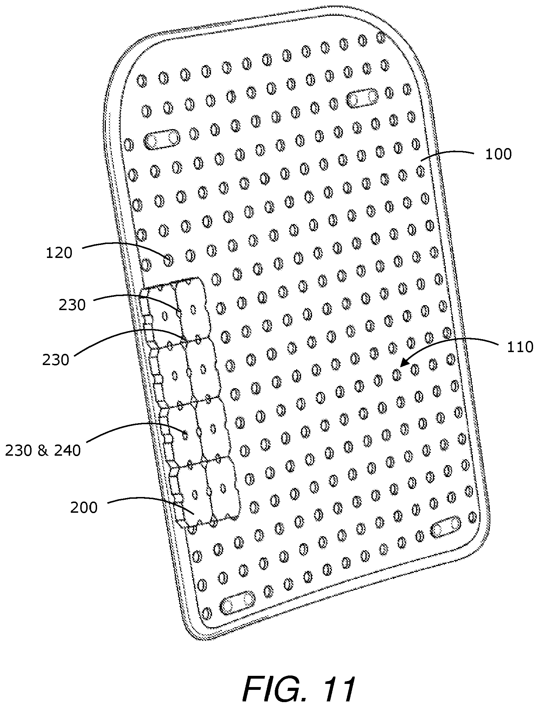

Figure 11 is an isometric view of a support element to be used as a contoured backrest, where contouring units are attached to one side of the support element to build the foundation for a side support;

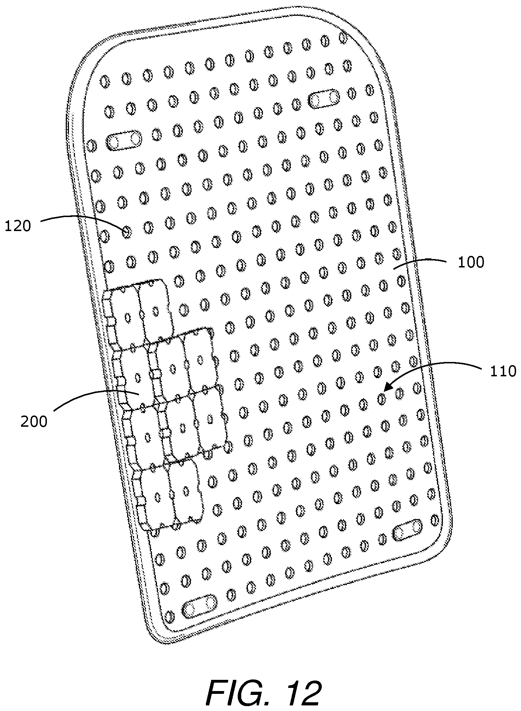

Figure 12 is an isometric view of the support element of Figure 11 where further contouring units have been attached to the side of the support element;

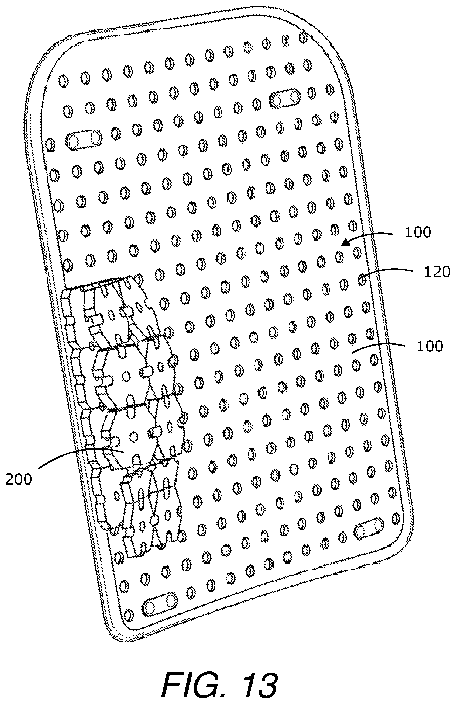

Figure 13 is an isometric view of the support element of Figure 11 where more contouring units have been attached to the side of the support element;

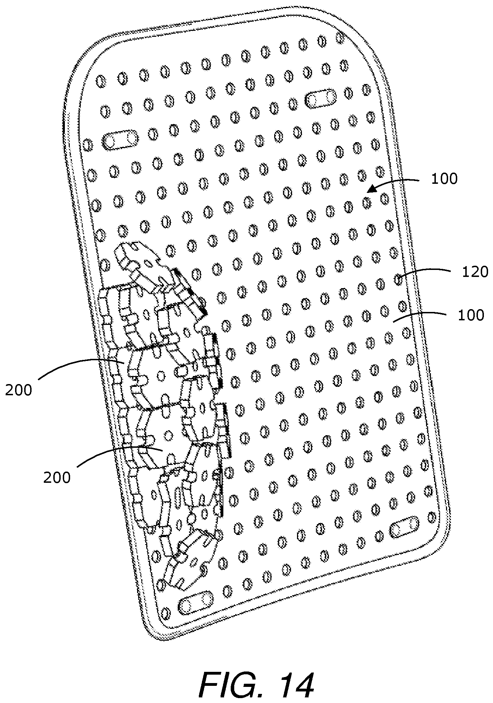

Figure 14 is an isometric view of the support element of Figure 11 where even more contouring units have been attached to the side of the support element to build up the contours of the side support;

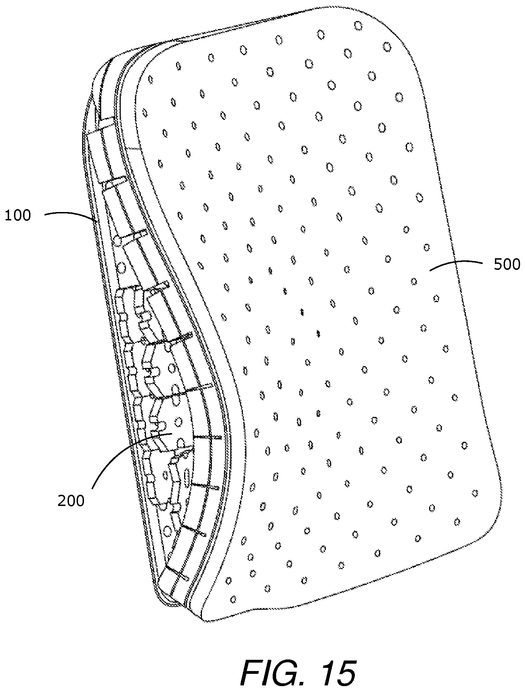

Figure 15 is an isometric view of an overlay, according to one form of the invention, positioned over of the contoured support element of Figure 14;

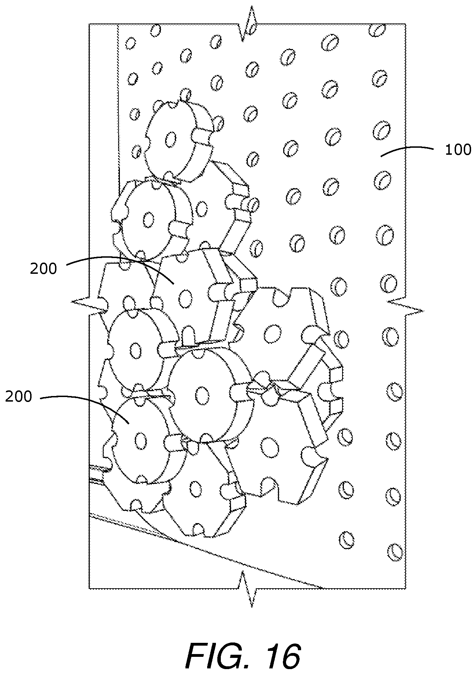

Figure 16 is an enlarged view of the contouring system of the invention used to build up one area of a support element;

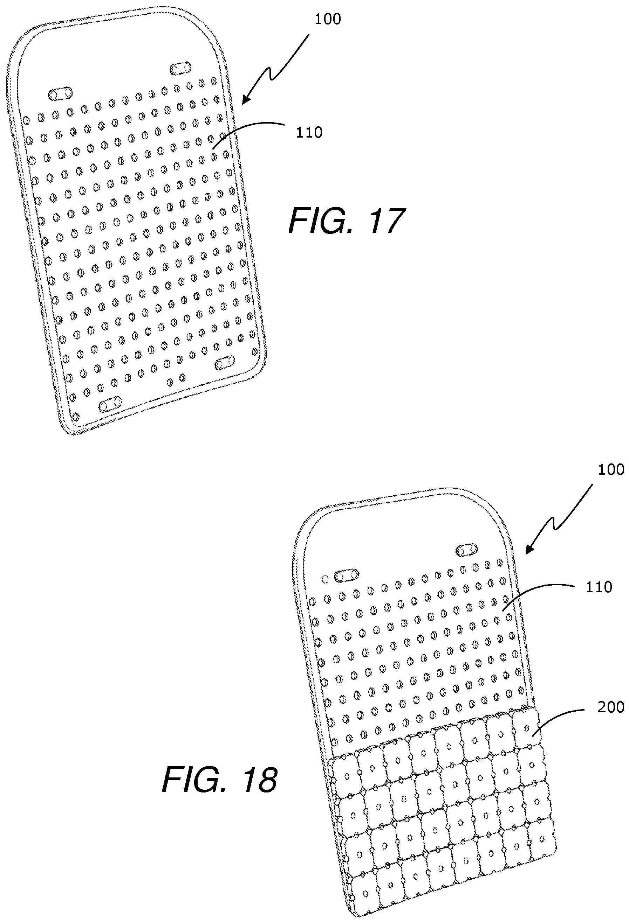

Figure 17 is an isometric view of a support element attached to a backrest shell of a wheelchair ready for contouring units to be attached to the contact surface of the support element;
Figure 18 is an isometric view of the support element of Figure 17 in which sets of four contouring units of one type of material have been attached to the lumbar region of the support element;

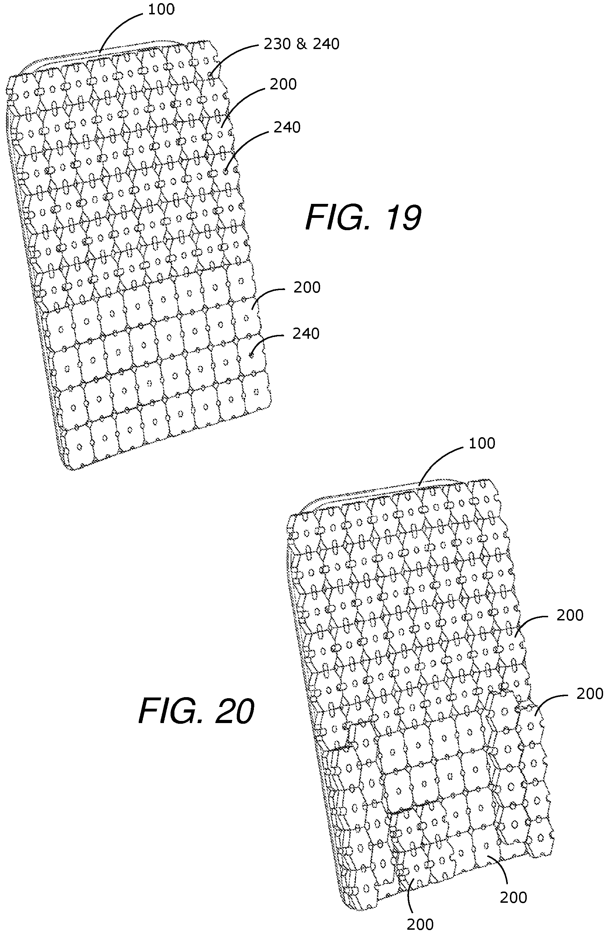

Figure 19 is an isometric view of the support element of Figure 18 in which contouring units of another type of material have been attached to the upper region of the support element;
Figure 20 is an isometric view of the support element of Figure 19 in which contouring units have been attached to the sides of the support element;

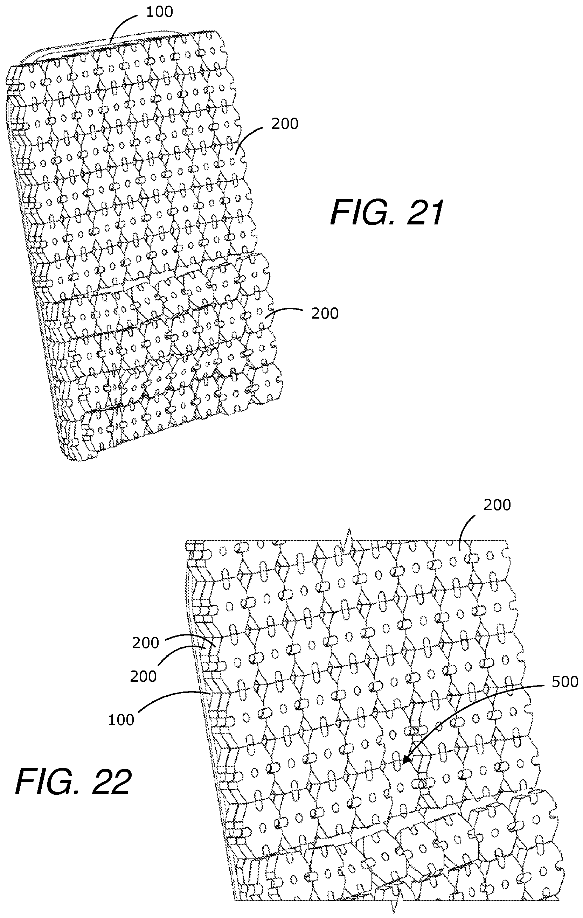

Figure 21 is an isometric view of the support element of Figure 20 in which contouring units of yet another type of material have been attached in a layer over substantially the whole of the contact surface of the support element;
Figure 22 is an enlarged isometric view of the system of Figure 21 in which a pair of contouring units has been removed from the top layer to form a recessed area;

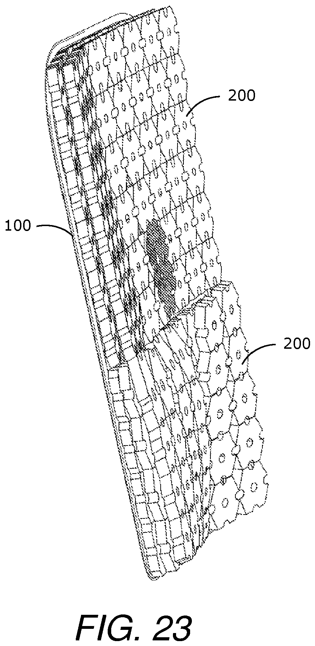

Figure 23 is an isometric view of the system of Figure 22 in which stabilisers have been used to stabilise contouring units around the recessed area;

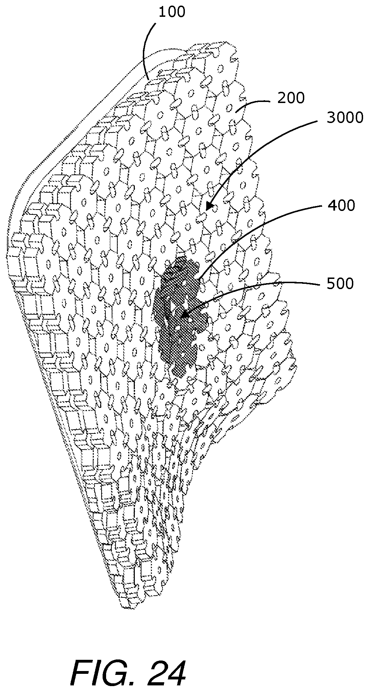

Figure 24 is an isometric view from above showing the completed contouring system of Figures 17 to 23;

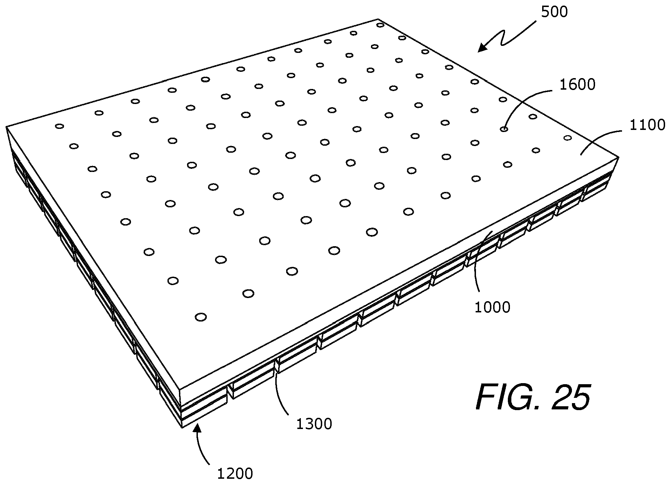

Figure 25 is a front view of one form of overlay of the invention;

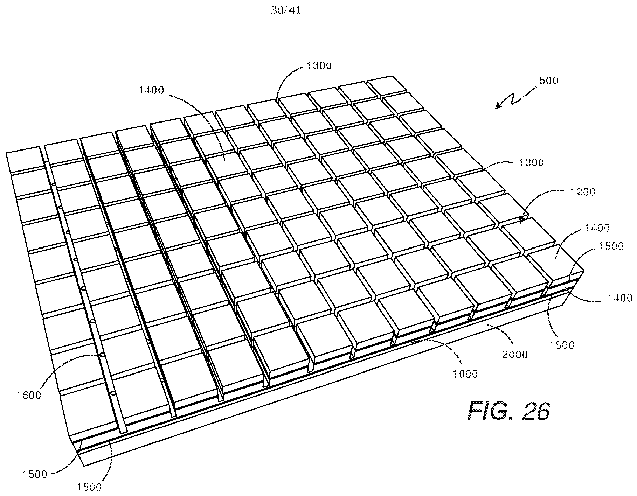

Figure 26 is a rear view of one form of overlay of the invention;

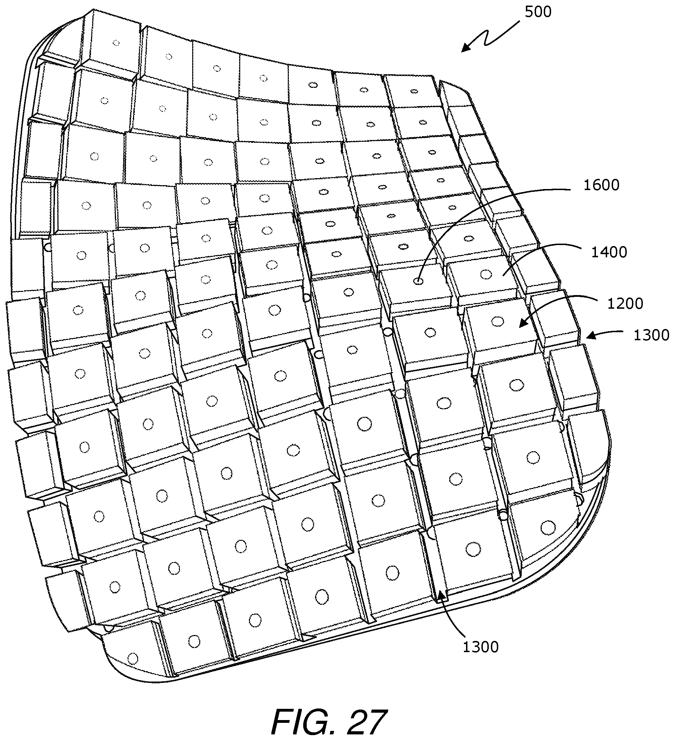

Figure 27 is a rear perspective view of the overlay of Figure 25;

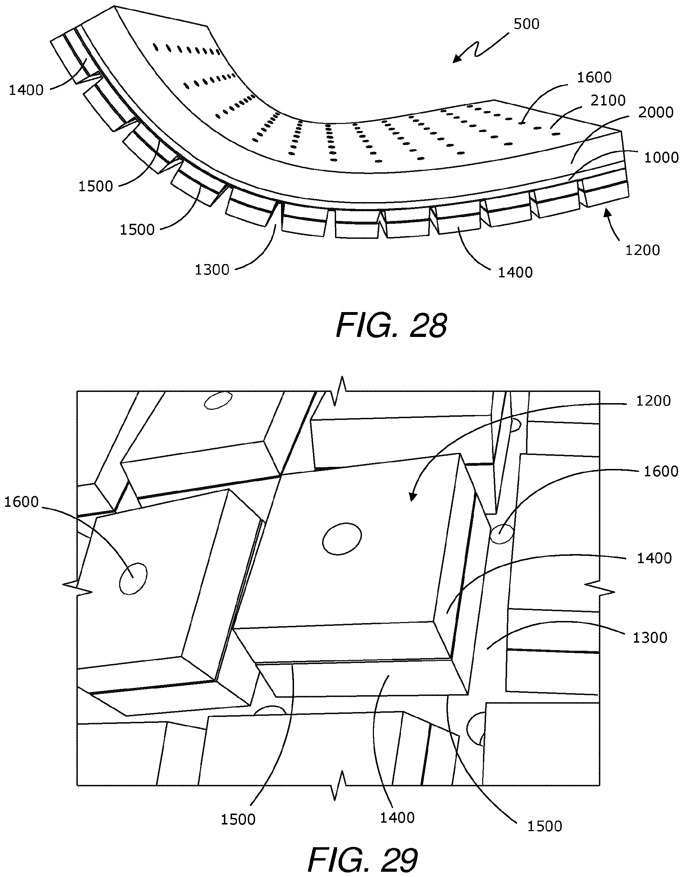

Figure 28 is a side perspective view of the overlay of Figure 25
Figure 29 is a close up view of the rear of the overlay of Figure 25, showing the stacked removable members according to one form of the invention;

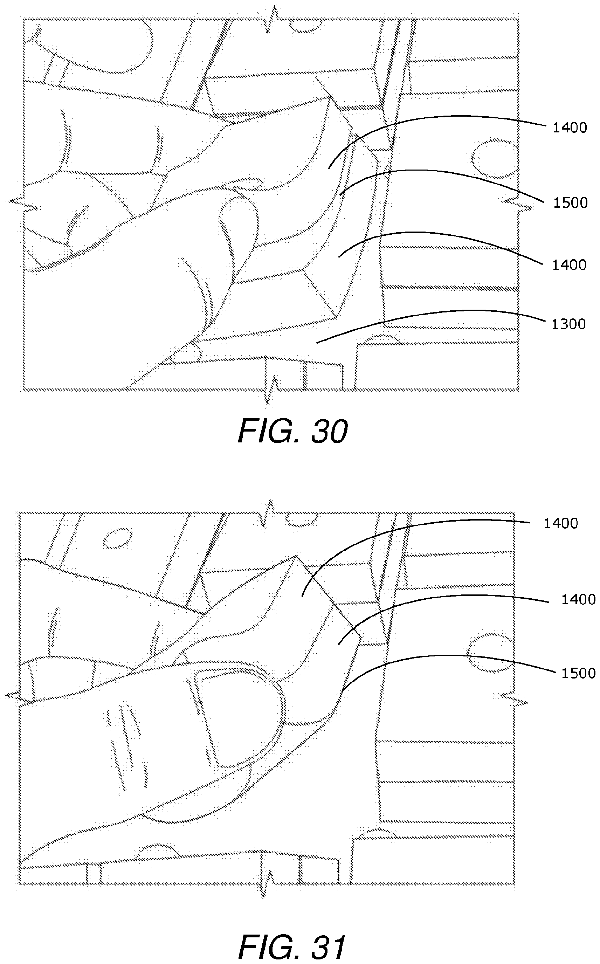

Figure 30 is a close up view of the rear of the overlay of Figure 28 where one removable member is being torn away from the adjacent removable member;
Figure 31 is a close up view of the rear of the overlay of Figure 28 where two members are being torn away from the overlay;

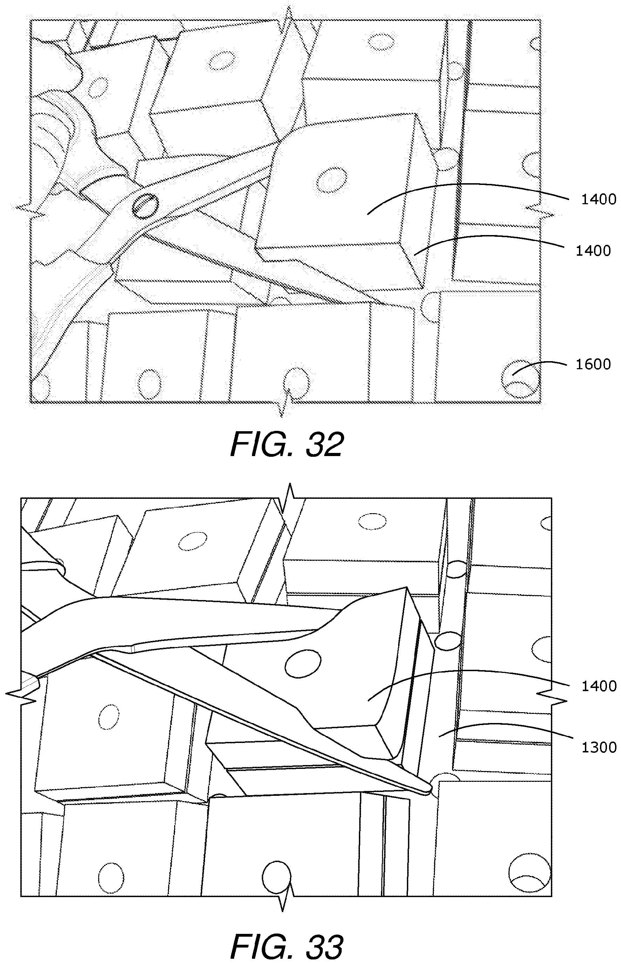

Figure 32 is a close up view of the rear of the overlay of Figure 28 where one removable member is being trimmed away from the adjacent removable member;
Figure 33 is a close up view of the rear of the overlay of Figure 28 where two stacked removable members are being trimmed at an angle;

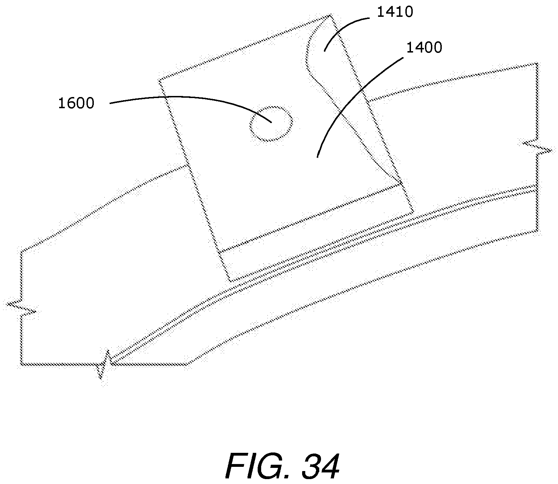

Figure 34 is a close up view showing a removable member that has been trimmed at an angle;

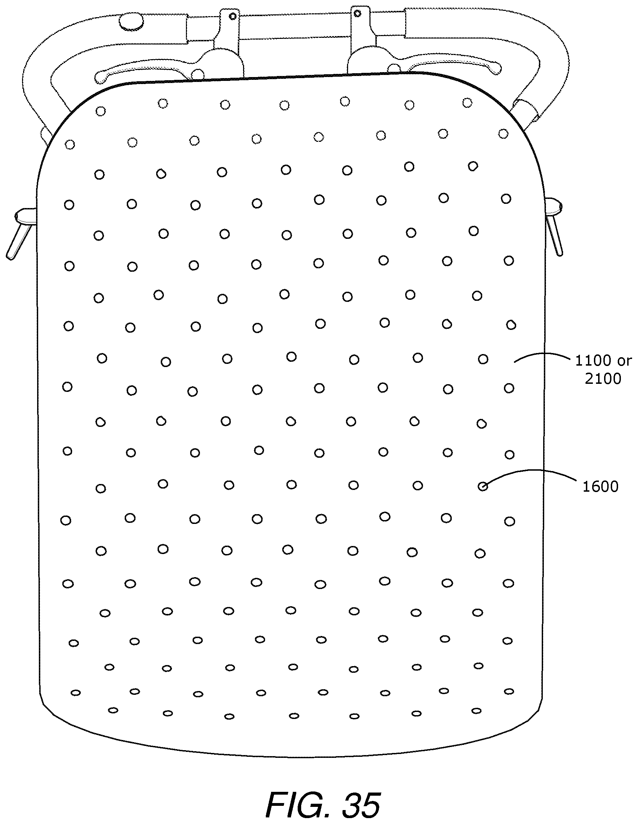

Figure 35 is a front view of one form of overlay of the invention that has been placed over the backrest of a wheelchair;

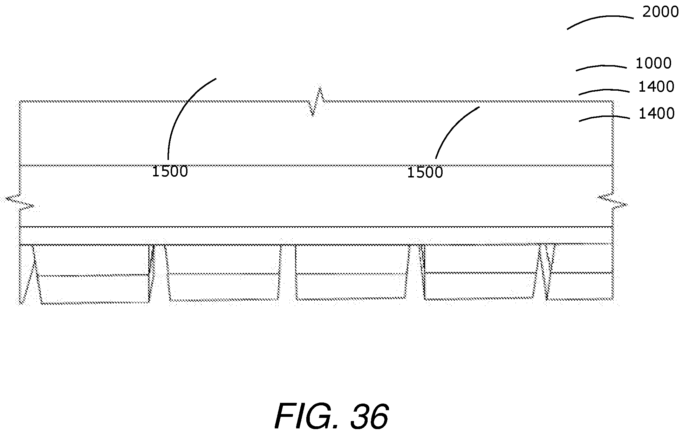

Figure 36 is a close up side view of one form of overlay having first and second layers;

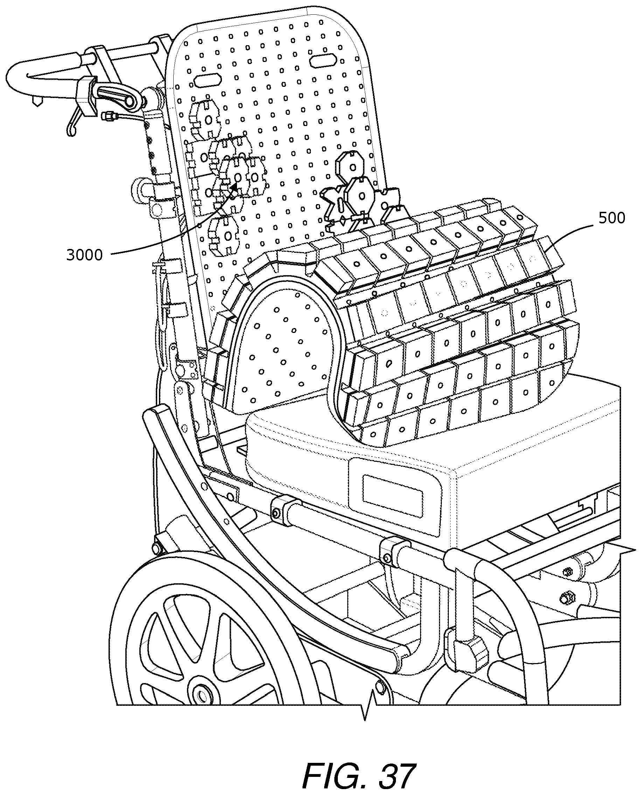

Figure 37 is an isometric view of an overlay of one form of the invention before placement over a contoured backrest of a wheelchair;

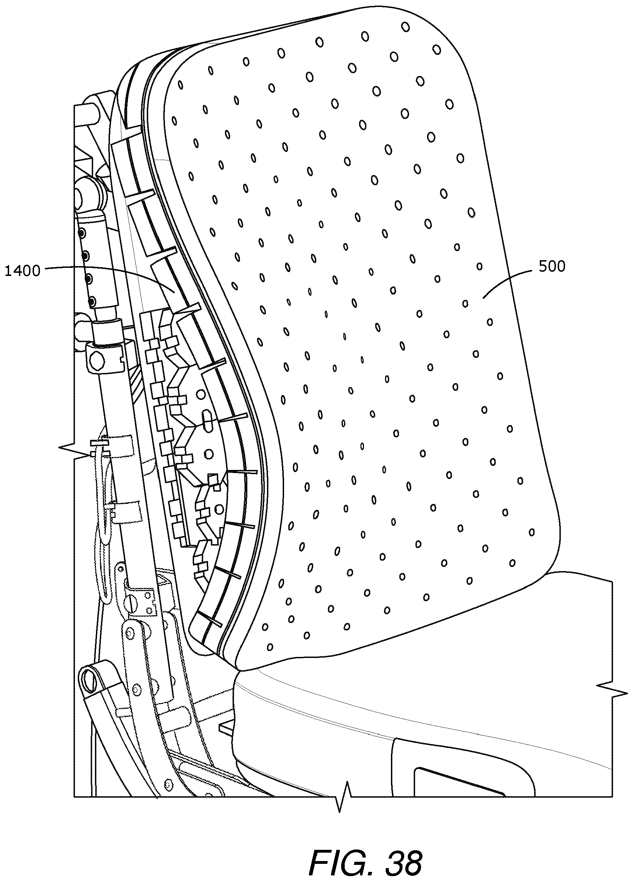

Figure 38 is an isometric view of the overlay of Figure 37 after it has been placed over a backrest having contouring on one side;

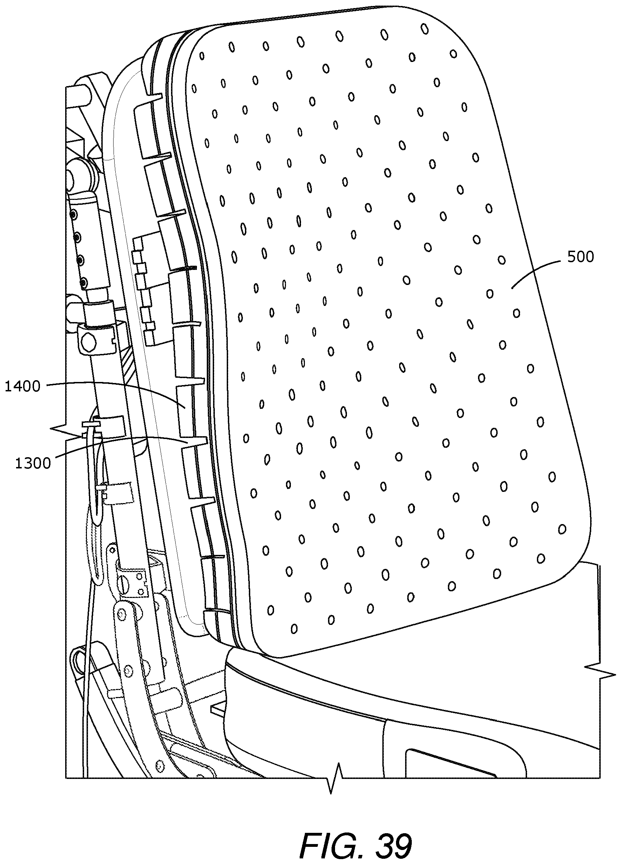

Figure 39 is an isometric view of the overlay of Figure 37 after it has been placed over a backrest having contouring on both sides; and

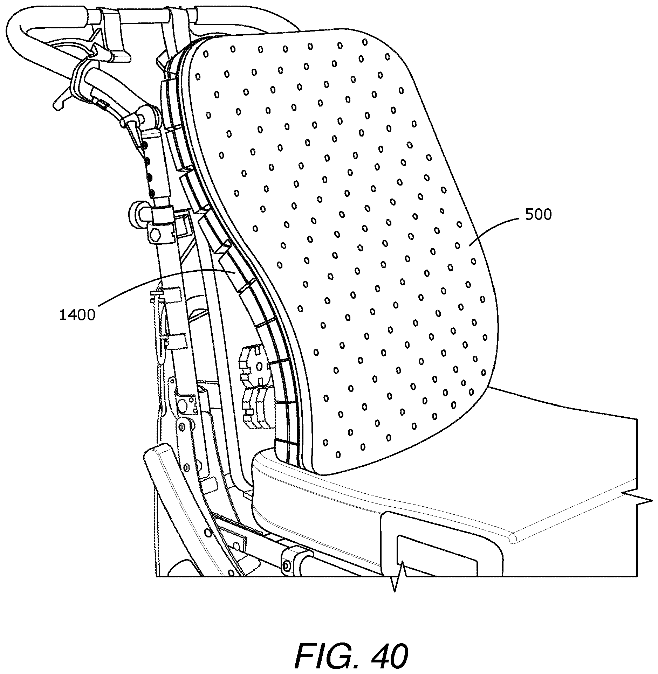

Figure 40 is an isometric view of the overlay of Figure 37 after it has been placed over a backrest having contouring in the lumbar region.

### DETAILED DESCRIPTION

The disclosure relates to a contouring system for contouring a surface of a support element, such as a backrest, seat base, or mattress. It also relates to components of the contouring system, including a support element, contouring units, attachment members, stabilisers, and an overlay.

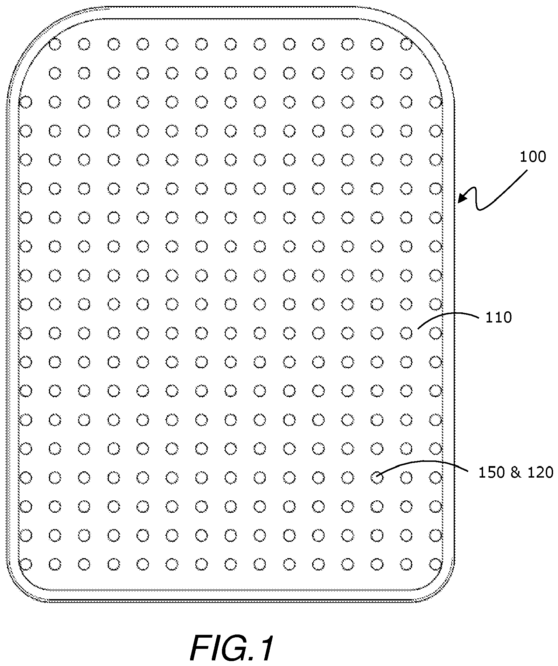

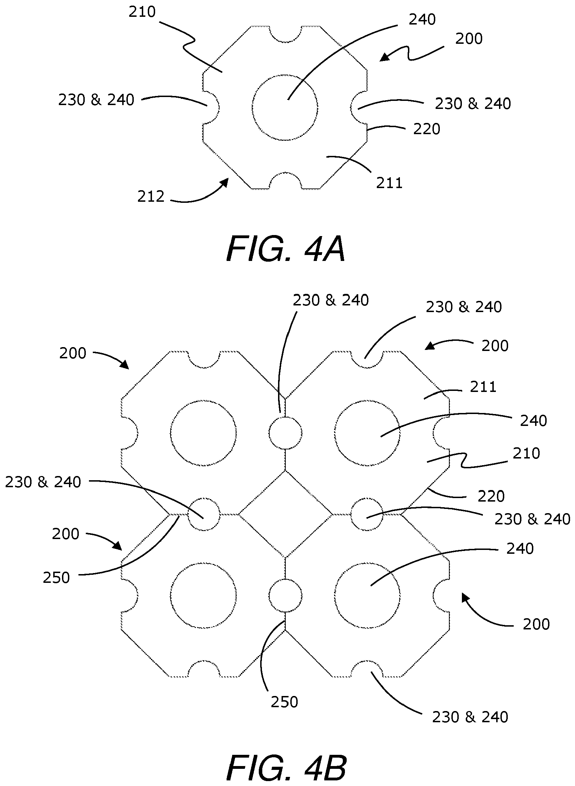

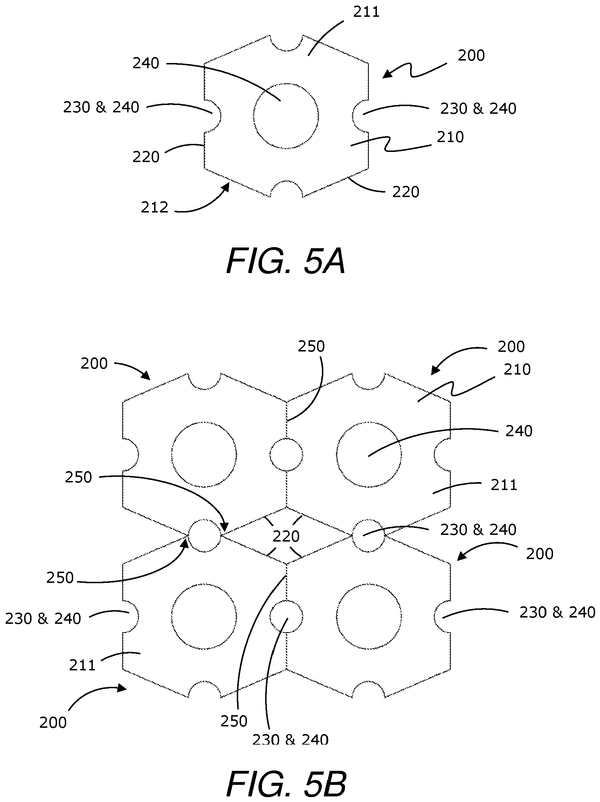

As shown in Figures 1 to 40, the contouring system comprises a support element 100 having a contact surface 110 to which one or more contouring units 200 may be attached to alter the contours of the contact surface 110.

The support element 100 may also comprise air vents 120 in the form of apertures that extend through the support element 100 to enhance air circulation through the contouring system. In one form, where the support element 100 will be used as a backrest on a wheelchair, the air vents 120 may be arranged to substantially align with apertures provided on the wheelchair backrest to encourage air circulation through the backrest.

The support element 100 may be rigid, semi-rigid or flexible. For example, the support element may be a rigid, semi-rigid, or flexible mat that may be attached to the backrest or seat base of a chair, such as a wheelchair, or that may be placed within a cover. Alternatively, the support element may be a flexible cover, such as a mattress cover or seat cover.

The contouring system of the invention also comprises a set of at least two contouring units 200 configured to be positioned at desired locations on the contact surface 110 of the support element 100.

Contouring units 200 may be configured to be attached to the support element 100 independently or one or more attachment members may be used to attach contouring units 200 to the support element 100.

The support element 100 comprises an attachment system that is configured to engage with contouring units 200 and/or one or more attachment members to attach one or more contouring units and/or attachment members to the support element 100.

In one form, the attachment system is provided on the contact surface 110 of the support element 100. The attachment system comprises a plurality of fasteners that are configured to engage with corresponding fasteners on the contouring units 200 and/or attachment members. The fasteners may be hook or loop fasteners, domes, buttons, button holes, hook or eye fasteners, interlocking male projections and female apertures or recesses, ties (especially for engagement with apertures or loops or other ties), or any other suitable fasteners. In a preferred form, the attachment system comprises a plurality of loops (suitable for a hook and loop fastening system) that cover substantially the whole of the contact surface of the support element.

In one form, the support element 100 may be configured so that its contact surface 110 is provided with outlines matching the outlines of contouring units 200. The outlines on the contact surface 110 are positioned to mark the locations at which contouring units 200 may be placed on the contact surface 110. However, it is not essential that contouring units 200 are placed at these locations.

The contouring units 200 are configured to be removably attached to the support element 100. By positioning the contouring units 200 on the contact surface 110 of the support element 100 and holding the contouring units 200 in position, it is possible to alter the contours of the contact surface 110 to meet the postural needs of the user of a seat or mattress bearing the support element 100. In some forms, to provide a contoured surface with the desired degree of contouring, the contouring units 200 may be layered on top of each other.

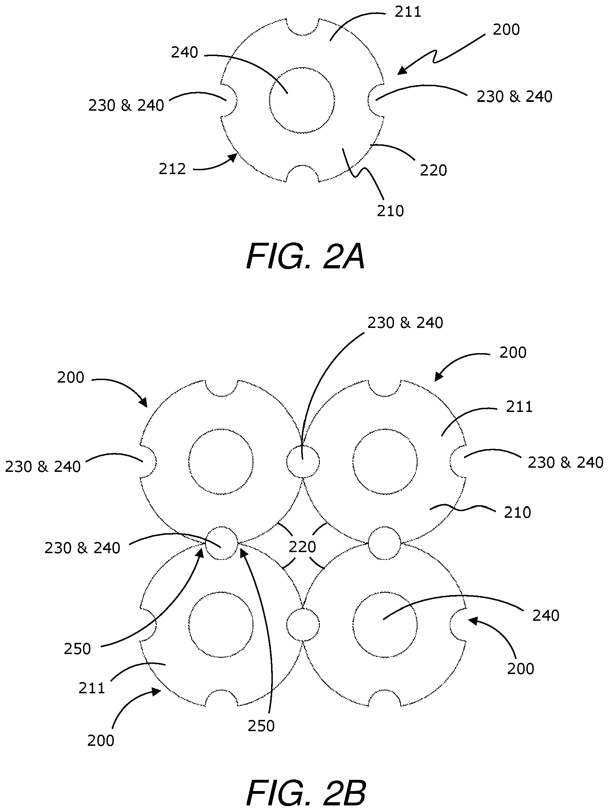

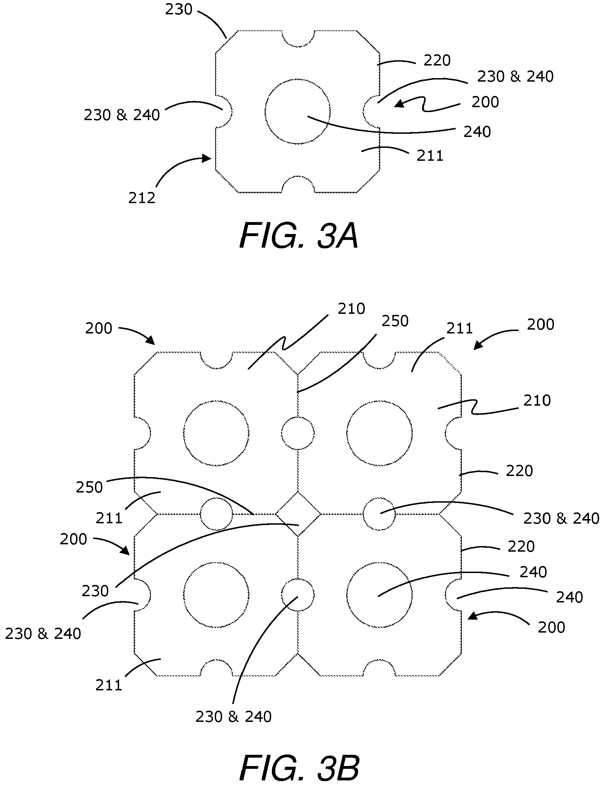

In one form, as shown in Figures 2a to 8b, each contouring unit 200 comprises a body 210 having a first surface 211 and an opposing second surface 212. Each contouring unit 200 also comprises one or more sides 220 that define a periphery of the contouring unit 200. For example, if the contouring unit 200 is circular, it will have one continuous side, as shown in Figures 2a and 2b, whereas if the contouring unit is substantially in the shape of a triangle, quadrilateral or hexagon, as shown in Figures 3a to 8b, it will have multiple sides. It should be appreciated that the contouring units 200 may be of any suitable shape, including but not limited to circular, triangular, square, rectangular, hexagonal, pentagonal and octagonal shapes. Circular contouring units have been found to collapse easily to provide further cushioning and to absorb point pressure well. Conversely, the greater surface area provided by square shaped contouring units are not so readily collapsible and therefore provide firmer support. Triangular shapes may also be useful because they are able to be arranged together in a tessellated fashion to form larger triangles or squares. The shapes and dimensions of the contouring units may be selected so that the contouring units may be placed adjacent each other on the support element to form a tessellated layer.

The contouring units 200 may be of any suitable colours and may be formed from any suitable materials, including but not limited to: foam (e.g. EVA or urethane foam), rubber, silicon, plastic, or gel-like materials within a flexible or semi-flexible casing. The contouring units 200 may also be of any suitable thickness. In one form, the contouring units 200 are between 20mm to 10mm thick.

The contouring units 200 may be rigid, but are preferably compressible to some extent. For example, the contouring system may comprise contouring units 200 having different compressibility characteristics. One or more contouring units 200 may be firm; one or more other contouring units 200 may be highly compressible; and other contouring units 200 may have different levels of compressibility within this range.

The contouring units 200 may be of any suitable size. In one form, the contouring units 200 are dimensioned to fit within a 50mm x 50mm area. However, in other forms, particularly where contouring units 200 are to be used in a back support lumbar region, the contouring units may be dimensioned to fit within a 150mm to 300mm area or larger. For use in a mattress situation, the contouring units 200 may be substantially larger again.

The contouring system may comprise contouring units 200 of different colours, shapes, sizes, and compressibility characteristics. In one form, contouring units 200 of a particular colour and/or shape will have the same compressibility characteristics. In this form, it is possible to quickly and easily select contouring units 200 having the required compressibility characteristics to achieve the level of contouring and comfort desired.

Both the first surface (211) and the second surface (212) of one or more contouring units 200 comprise fasteners for engaging with the attachment system of the support element and/or for engaging with each other. In one form, the first surface (211) and the second surface (212) comprise hook or loop fasteners. In one form, hook fasteners may be provided on the first surface and loop fasteners may be provided on the second surface of a contouring unit or vice versa. In this form, the attachment system of the support element 100 may comprise corresponding hook or loop fasteners for engaging with the first 211 or second surface 212 of the contouring units 200. In another form, the contouring units 200 and attachment system may comprise corresponding hook and eye fasteners, tie fasteners (especially for engagement with apertures or loops or other ties), dome fasteners, interlocking male projections and female apertures or recesses, or any other suitable corresponding fasteners to help hold the contouring units in position on the support element and/or in relation to each other.

In one form, a contouring unit 200 may be configured to encourage air circulation within the contouring unit 200 and between it and adjacent contouring units 200. For example, a contouring unit 200 may comprise air vents 230 in the form of one or more notches or grooves around the periphery the contouring unit 200. Alternatively or additionally, a contouring unit 200 may comprise air vents 230 in the form of one or more apertures extending through the body of the contouring unit. Preferably, the air vents comprise circular apertures having a diameter of about 25mm.

The air vents 230 help to encourage air circulation through the contouring system, when in use. A user is therefore less likely to become overly sweaty when using the contouring system. In addition, the use of air vents 230 reduces the weight of the contouring system.

A contouring unit 200 may comprise at least one guide path 240. Each guide path 240 is configured to allow an attachment member to pass through or to be threaded through the guide path to attach the contouring unit 200 to the attachment system of the support element 100 and/or to one or more other contouring units 200. An attachment member may be a strap, tie, or any other item suitable to attach the contouring units 200 to the support element 100 and/or each other. The attachment member is configured to pass through the guide path(s) 240 and attach to the support element 100 to hold the contouring unit 200 in a desired location on the support element 100.

In one form, the guide path 240 may comprise an aperture that extends through the contouring unit 200, as shown in Figures 2a to 8b. Preferably, the aperture 240 extends from the first surface 211 of the contouring unit to the second surface 212. The aperture may be of any suitable shape and size. In one form, the aperture is substantially circular and has a diameter of about 75mm. The aperture 240 may be substantially centrally located on the first surface 211 of the contouring unit 200 or the aperture may be offset from centre. An attachment member in the form of a strap, for example, may be configured to be threaded through the guide path aperture 240 and attached to the support element 100 at both ends. For example, in use, the contouring unit 200 may be placed on a support element 100 at a desired location so that its second surface 212 contacts the contact surface 110 of the support element 100. The attachment member strap may be fixedly or removably attached to the support element 100 at one end. The other end of the strap may be threaded through the guide path aperture 240 to pass over a portion of the first surface 211 of the contouring unit 200 and to then be removably attached to the support element 100 also. The attachment member and attachment system of the support element 100 may comprise complementary fasteners configured to engage with each other, such as hook and loop fasteners, hook and eye fasteners, domes, ties (especially for engagement with apertures or loops or other ties), buttons and button holes, or any other suitable fasteners. In one form, the contouring units may comprise one or more interlocking male projections and/or one or more female apertures or recesses. The male projections of one contouring unit are configured to fit within a female aperture or recess of another contouring unit, much like jigsaw puzzle pieces fit together. The interlocking male projections and female apertures may be located on the sides of a contouring unit and/or on the upper and/or lower surfaces of the contouring unit to allow the contouring units to be easily attached together in a side by side arrangement and in a stacked arrangement and to allow the contouring units to be easily unattached from each other.

In one form, the attachment system of the support element 100 may comprise one or more attachment apertures 150, as shown in Figure 1, and the attachment member may be in the form of a tie that is threaded through at least one attachment aperture 150 and through the guide path aperture 240 of at least one contouring unit 200 before opposing ends of the tie are secured to hold the contouring unit 200 in the desired location. The ends of the tie may be secured to each other or secured to one or more contouring units 200 or to the support element 100. The attachment apertures may also be used as air vents 120, as described above.

In other forms, the guide path 240 may comprise an aperture that extends through the contouring unit and between the first and second surfaces of the contouring unit. For example, a guide path aperture may extend from one side of the contouring unit to the other. Again, the contouring unit 200 may be attached to the attachment system of the support element 100 using an attachment member that is threaded through the guide path aperture 240 and attaches to the support element 100.

In some forms, a contouring unit 200 may comprise more than one guide path 240. For example, one or more guide paths 240 may extend from the first 211 to second 212 surface of the contouring unit 200 and/or one or more other guide paths 240 may extend between the first 211 and second 212 surfaces of the contouring unit 200 from side to side.

One form of contouring unit 200 comprises a pair of opposing guide paths 240, each guide path 240 being in the form of a recess and provided on the side or sides 220 of the contouring unit. In one form, the guide paths located on the side(s) of a contouring unit also act as air vents 230, as shown in Figures 2a to 8b. An attachment member, such as a strap or tie, is able to be placed across the contouring unit 200 and threaded between both guide path recesses 240. The ends of the attachment member may be configured to attach to the attachment system of the support element 100, as described above.

In yet another form, a contouring unit 200 may comprise one or more loops, ties, or securable straps that provide a collar, ring or the like, formed on the first 211 and/or second 212 surfaces of the contouring unit 200 and/or on a side or sides 220 of the contouring unit, not shown. The opening in the collar acts as a guide path 240 for an attachment member to be threaded through and held within the collar. The ends of the attachment member may be configured to attach the contouring unit 200 to the attachment system of the support element 100 in any suitable arrangement, as described above.

Optionally, a single attachment member may serve to attach two or more contouring units 200 to the support element 100 by threading the attachment member through guide paths 240 of the two or more contouring units 200 and attaching the attachment member to the attachment system of the support element 100.

In another form, a single attachment member may be used to attach two or more contouring units 200 together by threading the attachment member through guide paths 240 in the two or more contouring units 200 and attaching ends of the attachment member to each other or to the contouring units 200.

The attachment member may be of any suitable shape or form and may have fastener located at each end of the attachment member, or along the length of the attachment member, or at one or more points or areas on the attachment member, or across substantially the whole of one or more sides of the attachment member. In some forms, the attachment member is a strap or tie or the like. In other forms, the attachment member may be any substantially thin and flexible form.

The fasteners of the attachment members may be hook and/or loop fasteners, ties (especially for engagement with apertures or loops or other ties), domes, buttons, button holes, interlocking male projections and female apertures or recesses, or any other suitable fasteners configured to engage with a corresponding attachment system provided on the contact surface 110 of the support element 100. For example, if the ends of the attachment member have hook fasteners, the attachment system of the support element may comprise loop fasteners to engage with the hooks. In a preferred form, the attachment member comprises a strap where a first side of the strap is substantially covered with hook fasteners and a second side of the strap is substantially covered in loop fasteners. Optionally, the attachment member comprises a plurality of apertures to assist with air circulation around the contouring system.

The attachment member may be configured to be removably attached to the support element 100 in any suitable arrangement in order to attach one or more contouring units 200 to the support element 100 and/or to secure the contouring units 200 in position. For example, where the attachment member is an elongate form, it may be configured to be fixedly attached to the support element 100 at a first end and to be removably attached to the support element 100 at a second end or at any location between the first and second ends of the attachment member. In another example, the attachment member may be a strap that is configured to be removably attached to the support element 100 at both ends. In yet another example, the attachment member may be configured to tie one or more contouring units 200 to the support element 100, such as with cable ties, by passing through one or more guide paths 240 in the contouring unit(s) 200 and through one or more apertures in the support element 100 and then securing the ends of the attachment elements. The ends of the attachment elements may be secured together or to another item or items, such as to the support element 100 or to one or more contouring units 200. The contouring unit(s) 200 held in position by an attachment member can later be removed from the supporting element 100, if necessary, by cutting the cable tie.

In one form, the contouring system of the invention also comprises stabilisers 400 to help hold contouring units 200 in position and limit undesirable movement of the contouring units 200 in relation to the support element 100. Figures 9a to 9e show examples of different forms of stabilisers. The stabilisers can be used to attach contouring units 200 to the support element 100 and/or to each other in order to stabilise the position of contouring units in relation to the support element and each other.

Stabilisers 400 can be particularly useful at helping to hold contouring units 200 in position where the contouring units 200 are layered one upon another. Layered contouring units 200 may be prone to tilt, or slip, or creep over time as forces from a user push against the contouring units 200. For example, if the contouring units 200 are used to build a contour at the side of a backrest, a lateral force will be applied to the contouring units 200 as a user presses against the side of the backrest. This lateral force can cause the contouring units 200 to gradually creep in the direction of the force over time. The lateral force may also cause some of the contouring units 200 to begin to tilt and lift away from the support element 100.

The stabilisers 400 may be of any suitable shape. For example, the stabilisers 400 may be long and substantially thin straps, as shown in Figure 9a. In other forms, the stabilisers 400 may be larger and substantially sheet-like, as shown in Figure 9e. In yet other forms, the stabilisers 400 may be in the form of discs (as shown in Figure 9c), squares (as shown in Figure 9d), oblongs, hexagons (as shown in Figure 9b) or cross-shaped. Typically, the stabilisers 400 are substantially thin and flexible and are configured to be placed between layered contouring units 200 and/or across adjacent or substantially adjacent contouring units 200. However, in some forms, the stabilisers 400 may be rigid or semi-rigid.

In one form, the stabilisers comprise one or more air vents 410, which may be apertures or recesses, such as notches, 410 to encourage air circulation through the contouring system when in use.

In some forms, the attachment members may be configured to be used as stabilisers 400.

In one form, a stabiliser 400 is configured to wrap over one or more contouring units 200 and attach to the support element 100 without necessarily passing through guide paths 240 like attachment members.

In another form, the stabilisers 400 and contouring units 200 are adapted to attach to each other. For example, a stabiliser 400 may comprise fasteners across the whole of its first and second surfaces or across one or more areas on its first and second surfaces. In one form, a plurality of hook fasteners are provided on a first surface of the stabiliser 400 and a plurality of loop fasteners are provided on a substantially opposing second surface. A plurality of hook fasteners may be provided on a first surface of a contouring unit 200 and a plurality of loop fasteners may be provided on a substantially opposing second surface of the contouring unit 200. The contact surface 110 of the support element 100 may also be provided with loop fasteners. In this arrangement, the first surface 211 of a first contouring unit 200 may be attached to the support element 100 and the second surface 212 of the first contouring unit 200 may be attached to the first surfaces 211 of second and third contouring units 200, stacked side by side and on top of the first contouring unit 200. A stabiliser 400 may be used to hold the contouring units 200 in position by wrapping over all three contouring units 200 so that the hook covered first surface of the stabiliser engages with the loop covered second surfaces of the second and third contouring units and (optionally) with the loop covered contact surface 110 of the support element 100 also. Stabilisers 400 may also be used between stacked contouring units 200.

The contouring system of the invention may be provided in kit form, comprising: a support element 100 and one or more contouring units 200. Optionally, the kit may also be provided with one or more attachment members and/or one or more stabilisers 400. In one form, as described above, the attachment members may be configured to be used as stabilisers 400 also. The kit may also comprise an overlay, examples of which will be described later in this specification.

Two or more contouring units 200 are joined together to form a set. For example, two contouring units may be joined together to form a strip of contouring units, or to form a pair, or four contouring units may be joined together to form a set of four units in a matrix, as shown in Figures 2b, 3b, 4b, 5b, 6b, 7b, and 8b. Separation lines 250 may be provided between adjoined contouring units so that the contouring units may be separated into smaller units, if desired. In some forms, the separation lines may be so short as to be in the form of separation points or zones, as shown in Figure 2b. The contouring units 200 may be cut along the separation lines 250 with a sharp instrument.

In one form, the separation lines 250 are perforated lines or lines of weakness between adjoined contouring units 200 so that the contouring units 200 can be torn apart or peeled apart. For example, contouring units 200 may be adhered to togeter with a light adhesive to form a set of connected contouring units 200. These contouring units 200 may later be peeled apart along the lines of adhesive, which form separation lines 250. In another example, adjoined contouring units 200 may be formed in a single part and perforations may be provided to form separation lines 250 that allow the contouring units 200 to be torn apart or cut neatly along these lines 250. A set of four contouring units 200 may be separated into: two pairs of contouring units; a set of three contouring units and an individual contouring unit; or four individual contouring units. Any suitable number of individual contouring units may be joined together to form a set. For example, contouring units may be jointed together in sets of two, three, four, six, eight, or ten.

Figures 10a to 10d show the contouring system of the invention used to build a lumbar support on a support element to be used as a backrest according to one configuration. In use, a person begins attaching a first layer of contouring units 200 to the contact surface 110 of the support element 100 at desired positions in the lumbar region of the support element 100. For example, as shown in Figure 10a, a series of contouring units of a substantially square shape and compressibility are attached to the lumbar region of the contact surface of the support element in a first layer. The support element may also comprise air vents 120 in the form of apertures that are configured to substantially align with apertures provided in a backrest, such as a wheelchair backrest. Preferably, the contouring units 200 are arranged on the support element 100 so that air vents 230 of the contouring units substantially align with the air vents 120 of the support element 100.

In the configuration illustrated, the contact surface 110 of the support element 100 comprises loop fasteners and the first surface 211 of each contouring unit 200 comprises hook fasteners that engage with the loop fasteners of the contact surface 110. The second surface 212 of each contouring unit 200 comprises hook fasteners.

A second layer of contouring units 200 may be positioned on top of the first layer. In Figure 10b, substantially hexagonal shaped contouring units 200 are layered over the square units 200 and are positioned to taper over the edges of the square contouring units 200. The contouring units 200 at the bottom of Figure 10b have been cut in half.

The layers are built up until the desired degree of contouring is obtained. In Figures 10c and 10d, substantially hexagonal contouring units 200 are layered over the substantially square contouring units 200 to build up a protruding contoured support in the lumbar region of the support element 100. The contouring units 200 may be held in place with attachment members and/or stabilisers 400 (not shown).

Preferably, the contouring units 200 of the second layer are positioned over the contouring units 200 of the first layer so that, where possible, the air vents 230 of the contouring units 200 in each layer substantially align with air vents 230 provided on the support element 100 and backrest.

The substantially hexagonal and square shaped contouring units 200 may have different compressibility characteristics. For example, the contouring units 200 in the first layer (in this case the substantially square shaped units) may be formed of a substantially firm material and the contouring units 200 in the second layer (in this case the substantially hexagonal shaped units) may be formed of a softer, more compressible material.

Figures 11 to 15 show the contouring system of the invention used to build contours at one side of a support element 100 according to one configuration. In this illustration, the support element 100 will be used as a backrest to support a user having an asymmetrical posture.

In the same manner as described above, a first layer of contouring units 200 are added to the support element 100 at the area where support is required, as shown in Figure 11. To provide additional contouring and support, further contouring units 200 are then added in a second layer, as shown in Figure 12. A third and then fourth layer of contouring units 200 are then attached to the support element 100, as shown in Figures 13 and 14. Again, the contouring units 200 may be held in place with attachment members and/or stabilisers 400 (not shown).

Optionally, an overlay 500 may be placed over the contoured support element 100, as shown in Figure 15.

In yet another form, the contouring system may be used to build up more than one area of a support element. For example, the contouring system may be used to build up the upper left and lower right sides of a support element to be used with a backrest, seat base or mattress to support a user with an asymmetrical posture.

Figure 16 shows an enlarged view of layered contouring units 200 of hexagonal and circular shapes being used to build up a contoured surface in one area of a support element 100. Again, the different shaped contouring units may have different compressibility characteristics.

Figures 17 to 24 show the contouring system of the invention being use to create a lumbar support in yet another configuration.

Figure 17 shows a semi-rigid support element 100 attached to a curved backrest shell of a wheelchair so that air circulation apertures 120 of the support element 100 substantially align with apertures on the backrest shell. In this instance, the support element 100 is attached to the backrest shell with four mounting plates, and is optionally bolted in place. However, the support element 100 may be attached to the backrest shell using any suitable arrangement, including but not limited to the use of hook and loop fasteners.

In yet another form, not shown, the support element is configured to slide in and out of a cover, such as a backrest cover that is configured to fit over the support element and contouring units. In this configuration, while the user is still in the chair and leaning forward, the support element and contouring units can be removed in one piece.

Contouring units are attached in a layer to the support element to substantially cover the contact surface of the support element. The contouring units provide a layer of cushioning and can take the place of regular foam padding, if desired.

In Figure 18, a series of contouring units 200 in sets of four are attached to the lumbar region of the support element 100. It is more time efficient to apply the contouring units 200 in sets of four, but it should be appreciated that the contouring units 200 may be applied in pairs, strips of multiple contouring units, or individually without departing from the invention. Any suitable attachment system may be used. Hook and loop fasteners (as described above) are used in the system illustrated.

The contouring units 200 illustrated are substantially square shaped and are formed from substantially firm foam (in this case closed cell foam). The square shape itself is advantageous in this configuration because its solid presentation of material offers good support. The use of substantially firm contouring units is ideal for areas where maximum support and minimum movement of the contouring unites is desired - such as in this situation

In Figure 19, a series of contouring units 200 of different shapes and of a more compressible nature are provided along an upper region of the support element 100. The hexagonal contouring units 200 depicted are formed of high resilience foam and are provided in sets of four. The hexagonal shape of these contouring units 200 also contributes to the compressible nature of contouring units 200 by having a lower surface tension than the substantially square shape. As in a honeycomb, the hexagonal shape is suitable for providing a tessellated layer of contouring units 200. Optionally, the contouring units 200 may be configured to interlock for additional support.

The contouring units 200 are typically positioned on the support element 100 so that the air vents 230 of the contouring units 200 substantially align with air vents 120 of the support element 100 and backrest shell. The aligned channels 120, 230 also allow for attachment members in the form of ties or straps to be used to help hold the contouring units in position, especially where the system will be employed for a user with significant movement that may separate the contouring cells.

Figure 20 shows the addition of a second layer of contouring units 200 to build up the sides of the backrest as lateral bolsters. The contouring units 200 shown forming the second layer are provided in strips of four contouring units. A set of four contouring units provided in a matrix is also shown near the centre of the lumbar region.

In Figure 21, a further layer of contouring units 200 has been placed in sets of four over substantially the whole of the support element 100. The octagonal contouring units 200 of this layer are preferably soft and easily compressible to provide a substantially cushioning surface.

In Figure 22, a pair of adjacent contouring units 200 has been removed from area 500 by separating a set of contouring units in half along a separation line 250. The removed contouring units 200 provide a recess to accommodate a protrusion on the user's spine.

In Figure 23, stabilisers 400 have been used to hold the contouring units 200 around the recess in position. The stabilisers 400 also provide a tapered surface between the contouring units 200 on the top layer and those in the recess on the layer below.

Figures 23 and 24 show the contoured backrest from the side and above respectively, where the layers of contouring units 200, the lumbar support, and the recessed central region can clearly be seen.

The contouring units 200 positioned at the corners of the backrest may optionally be trimmed to match the shape of the backrest shell and/or the shape of the support element 100.

An overlay 500 or cover may be placed over the contoured support element 100. Where an overlay is used, a cover may be placed over the overlay and support element in combination to contain the entire contouring system securely within the cover.

In one form, the contouring system may be provided with contouring units 200 already attached to the support element 100. Optionally, the contouring units 200 are attached to the support element 100 in either a tessellated or random configuration. A person can then reposition or remove contouring units 200 to build a contoured surface that meets the needs of the user.

In one form, the contouring system of the invention also comprises an overlay 500 that is configured to substantially conform around a contoured surface of a supporting element, the contoured surface being created by the contouring units of the invention. The overlay may optionally be included in the kit of parts comprising components of the invention.

Referring to Figure 25, in one form, the overlay 500 comprises a first layer 1000 having a front surface 1100 and an opposing rear surface 1200. A plurality of channels 1300 are formed on the rear surface 5200 of the overlay and extend in a first direction along the rear surface 1200. The channels 1300 may extend laterally, horizontally, diagonally, or at any desired direction along the rear surface.

In one form, the rear surface 1200 of the overlay 500 also comprises a plurality of channels 1300 that extend in a second direction along the rear surface, as shown in Figures 26 and 27. The second direction may be at any angle between 0-180° relative to the first direction. In one form, the second direction is substantially orthogonal to the first direction so that the channels extending in the first and second directions bisect to form a grid-like arrangement. In this form, square or rectangular shapes are formed between the channels 1300 on the rear surface of the overlay, as shown in Figure 26 and 27.

In one form, the channels 1300 may be formed in the first layer 1000 when the first layer is manufactured. For example, the first layer may be formed from a moulded material in which the channels are provided during the moulding process. In another form, the channels 1300 may be cut into the rear of the first layer or may be otherwise formed in the first layer 1000. In another form, the first layer may be built up to provide channels and shapes between the channels by attaching the shapes to a layer of material that forms the body of the first layer. The body may be formed of foam, rubber, silicone, or any other suitable material. The shapes may be the same material as the body of the first layer or they may be formed form a different material. The shapes may be attached to the body of the first layer in a desired arrangement, such as a grid-like arrangement, so that a channel is provided between adjacent shapes. The shapes may be attached to the layer by welding, bonding or adhering the shapes to the layer of material, or by the use of corresponding hook and loops fasteners that may be applied to at least one surface of a shape and to the surface of the material to which the shape will be attached. The shapes may be adhered to the material layer using a light application of glue or a suitable adhesive that allows the shapes to be peeled off and repositioned. In each of the configurations where the shapes are adhered or attached to the body of the first layer using hook and loop fasteners, the shapes can be peeled away from the body of the first layer, if necessary.

The channels 1300 may be of any suitable width and depth, provided that the channels 1300 are not so wide or deep as to damage the structural integrity of the first layer 1000, which would make the overlay 500 vulnerable to shear forces that could cause the overlay 500 to tear or otherwise break.

In one form, each channel is in the form of a substantially straight line. However, in other forms, one or more channels may be curved or angled to achieve the desired contouring effect of the overlay and/or to produce desired shapes between adjacent channels.

The overlay 500 is formed of a flexible or semi-flexible material that becomes more flexible after the channels 1300 are provided on the rear surface 1200. The channels 1300 assist the overlay to substantially conform around a contoured surface, as shown in Figure 27.

The first layer 1000 of the overlay 500 may be formed of foam, rubber, silicone or any other suitably conforming material. Preferably, the overlay 500 comprises a compressible material on its front surface 1100 to support the comfort of the user. Preferably, the front surface of the overlay is also soft to provide cushioning characteristics.

The rear surface 1200 of the first layer 1000 may be configured to provide one or more removable contouring members 1400 between adjacent channels 1300. For example, where the channels 1300 form a grid-like arrangement, the square or rectangular shapes between the channels may be configured to be removable so as to form removable contouring members 1400. Similarly, where the channels form a lattice arrangement that provides diamond shapes between adjacent channels, the diamond shapes may be configured to be removable so as to form removable contouring members.

Separation lines 1500 may be provided on the rear surface 1200 of the first layer 1000 to define a line of separation along which the removable contouring members 1400 can be removed from the first layer 1000, as shown in Figures 30 and 31. In one form, the separation lines 1500 may be perforations or the like that are provided between the removable contouring members 1400 and the main body of the first layer 1000. The removable contouring members 1400 may therefore be removed from the rear surface 1200 of the first layer 1000 by tearing, cutting or otherwise separating the contouring members 1400 along the separation lines 1500.

In one form, the first layer 1000 may be configured so that two or more removable contouring members 1400 are stacked one on top of the other between adjacent channels 1300, as shown in Figure 29. In this form, separation lines 1500 may be located between each stacked contouring member 1400, as shown in Figure 30, and between the body of the first layer 1000 and the removable contouring members 1400, as shown in Figure 31, to allow for ease of removal of individual contouring members 1400.

In another form, the first layer 1000 is not provided with separation lines 1500. In this form, the removable contouring members 1400 may be cut away from the first layer 1000 with scissors, a knife, or other sharp instrument, as shown in Figure 32. In some forms, the first layer 1000 may be made of a material, such as a suitable type of foam, which allows for the removable contouring members 1400 to be easily torn or peeled away from the main body of the first layer even when separation lines are not present.

Optionally, one or more removable contouring members are of similar dimensions to one or more contouring units. In this arrangement, if a contouring member is removed from an area of the overlay and, at a later date, the user requirements change so that the contouring member no longer needs to be removed, the contact surface of the support element can be configured so that an additional contouring unit is placed on the contact surface at an corresponding to the location on the overlay where the original contouring member was removed.

In some forms, the removable contouring members 1400 may be trimmed to a desired shape, instead of being removed. For example, angles may be cut in one or more contouring members 1400, as shown in Figures 33 and 34. Optionally, the removable contouring members 1400 may be provided with one or more angled separation lines 1500 to allow the contouring members 1400 to be easily angled by tearing or cutting along one or more angled separation lines 1500.

In one form, the overlay 500 may comprise a plurality of apertures 1600 to support the breathability of the overlay 500. For example, apertures 1600 may be formed in the first layer 1000 and may extend through the main body of the first layer 1000 and through the removable contouring members 1400, as shown in Figures 25 to 34. Alternatively or additionally, apertures 1600 may extend through the main body of the first layer 1000 and through the channels 1300 on the rear surface 1200 of the first layer 1000.

In one form, each removable contouring member 1400 comprises at least one aperture 1600. In some embodiments, each removable contouring member 1400 comprises a centrally located aperture 1600, as shown in Figures 27 to 34. The apertures 1600 of stacked removable contouring members 1400 are typically aligned.

The apertures 1600 may be circular holes, oblong slots, or of any other suitable shape to assist air circulation within the overlay 500.

The overlay 500 of the invention may be used as a single layer overlay, as described above, or the overlay 500 may comprise a flexible or semi-flexible second layer 2000 having a front surface 2100 and a rear surface 2200. The second layer 2000 is attached to the front surface 1100 of the first layer 1000, as shown in Figure 36. The second layer 2000 may be adhered, bonded, or otherwise attached to the first layer 1000 in any suitable manner that allows both layers 1000, 2000 to conform together around a contoured surface. For example, the rear surface 2200 of the second layer 2000 may be adhered, bonded or otherwise attached to the front surface 1100 of the first layer.

In one form, the second layer 2000 may be formed of a soft, cushioning, conforming material to provide comfort to the user. For example, the second layer 2000 may be a fabric layer, or may be a foam, silicone, or rubber layer or any flexible or semi-flexible and suitably soft, conforming material. Where both the first and second layers 1000, 2000 of the overlay are formed of foam, different foams may be used such that one layer is of a different density to the other layer. In a preferred form, both the first and second layers 1000, 2000 are formed of foam and the first layer 1000 is of lesser density to the second layer 2000.

In one form, the overlay may include three or more layers, so that the second layer is sandwiched between the first layer and a third layer. One or more layers of the overlay may be formed of a different material to one or more of the other layers. Additionally or alternatively, one or more layers of the overlay may comprise different compressibility characteristics than one or more other layers.

In one form, one or more layers of the overlay may comprise areas of different material and/or different compressibility characteristics to one or more other layers of the overlay. For example, if the overlay is to be used in a seat backrest, it can be useful to configure the lower part of the overlay to stabilise the pelvis of the user. To assist with this stabilisation, in one form, at least one layer of the overlay, such as the first layer, may comprise firm foam between the rear edge of the overlay and the sacral area, which is the area that lies behind a user's sacrum during use. Softer, more compressible foam may then be used for the rest of the layer, in front of the sacral area to the front edge of the overlay. In another example, if the overlay is to be used as a mattress, at least one layer of the overlay, such as the first layer, may comprise a firmer foam or padding material under the middle part of the mattress providing support for the weight bearing area for the torso.

The second layer 2000 may also include a plurality of apertures 1600 to support the breathability of the overlay 1. In one form, the apertures 1600 are aligned with apertures 1600 provided on the first layer 1000 so that air can circulate freely between both the first and second layers 1000, 2000.

In one form, the overlay 500 comprises apertures 1600 that are positioned on the second layer 2000 and/or the first layer 1000 of the overlay 500 in a configuration that substantially corresponds to the configuration of apertures provided on a mattress or seat, such as a wheelchair backrest, on which the overlay will be placed. For example, apertures 1600 in the form of circular holes may be provided on the overlay 500 and backrest in a substantially regular configuration and may preferably be spaced equidistant from each other to allow air to circulate freely between the overlay 500 and the seat, as shown in Figure 37. In other forms, the apertures may be slots, triangular shapes, square shapes or of any other suitable shape. The apertures may be regularly or irregularly arranged on the overlay.

The overlay is configured to be used with a supporting element, such as a mattress or seat, such as a wheelchair seat base or backrest, a dining chair, lounge chair, a car seat, an aircraft seat, or any other seat or article in which contoured cushioning is required

In use, the overlay 500 is positioned over a supporting element so that the rear surface 1200 of the first layer 1000 faces toward the supporting element. Typically, but not necessarily, the supporting element is contoured by being configured to include raised areas and/or recessed areas to support the posture and/or alignment of the user, as shown in Figure 37. The supporting element may be a cushioned surface or a rigid surface. An overlay to be used with a rigid supporting element preferably comprises a cushioning material, such as foam, rubber, or silicone. As the overlay 500 is placed on the contoured surface of the supporting element, as shown in Figures 38, 39, and 40, the channels 1300 allow the overlay 500 to flex around the contours and to substantially mould to the shape of the contoured surface. The resulting contours in the overlay 500 may be reduced or increased in extent by removing one or more removable contouring members 1400 from the rear surface 1200 of the overlay 500. In this way, the overlay 500 can provide a soft and contoured surface to satisfy the postural and/or alignment needs of user.

Optionally, after the contoured surface of the support element is covered with an overlay according to the invention, the contouring system may then be covered by a flexible cover.

The flexible cover may be of any material that can stretch and/or mould around the support element and contouring units and optionally the overlay also. In one form, the flexible cover may be formed of a waterproof material, so that the contouring system may be used with a commode to support a user in a shower. Optionally, the cushioning units may also be made form a waterproof material, such as non-pervious foam.

### Advantages of the Invention

The contouring system of the present invention can be used to support and/or to provide customised contoured cushioning to meet the needs of individual users.

The configuration of the contouring units allows for the units to be stacked in layers and secured in position with attachment members and/or stabilisers. Therefore, a significant level of contouring can be provided while the contoured surface is held in a substantially stable arrangement. This reduces or eliminates migration of the contouring units and substantially avoids the need to reposition the contouring units due to slippage/migration over time.

By securing the contouring units to a support element and/or to each other, there is less risk that the desired positioning of the contouring units, as established by a clinician, may be interfered with by others, such as family members or friends of the user.

The contouring system of the invention is versatile in that the contouring units may be tied to the support element and the support element and units may be waterproof so that the contouring system may be used with a commode for example. Alternatively, the contouring system may be covered in a waterproof cover.

In some embodiments, the apertures formed in the support element, contouring units, attachment members, stabilisers, and overlay allow for improved breathability, so that a user of the overlay is less likely to become hot and sweaty or retain moisture on the areas of the user's body that contact the contouring system. The apertures also reduce the weight of the contouring system, which is useful for people that are carrying a mattress or seat, such as wheelchair, that bears the contouring system. The apertures also assist to greater flexibility to the foam or material structure of the contouring units and overlay to provide greater comfort to the user.

The overlay of the invention provides channels on the rear surface that allow the overlay to readily adapt to the contours of the supporting contact surface with which the overlay will be used.

The configuration of the channels also allows for greater control over the extent to which the overlay compresses in different areas. In effect, the channels act to substantially isolate each removable contouring member from adjacent removable contouring members. This means that it is possible to compress areas of the overlay without creating significant amounts of sink in adjacent areas. The channels substantially break up the foam structure to provide greater conformity and comfort.

It is also possible to alter the contouring effect of the overlay by removing one or more of the removable contouring members from the rear surface of the overlay.

Although the invention has been described by way of example, it should be appreciated that variations and modifications may be made without departing from the scope of the invention as defined in the claims.

## Claims

1. An adjustable backrest contouring system for use in a chair, the contouring system comprising:
a support element (100) comprising a contact surface (110) comprising a plurality of hook or loop fasteners; and
a set of at least two contouring units (200), each contouring unit comprising a body comprising a first surface (211) and an opposing second surface (212), each of the first and second surfaces comprising hook or loop fasteners, and further comprising one or more sides that define a periphery of the contouring unit;
wherein one side of at least one of the contouring units is attached to one side of at least one other contouring unit of the set by a perforated connection that allows the contouring units to be detached from each other;
wherein the contouring units are each removably attachable to the contact surface (110) at desired locations on the contact surface (110) to form one or more layers of contouring units (200);
**characterized in that** the contouring system also comprises at least one flexible stabiliser (400) configured to be located between or across at least two of the contouring units (200) and configured to attach to each of the at least two contouring units, wherein each stabiliser comprises a first surface and an opposing second surface and wherein the first surface comprises hook or loop fasteners and the second surface comprises hook or loop fasteners to removably attach one of the contouring units (200) to another of the contouring units (200) or to the contact surface (110) in order to hold the layered contouring units in a desired position on the support element (100).

2. The contouring system of claim 1, wherein each contouring unit (200) comprises a plurality of vent holes.

3. The contouring system of claim 1 or 2, wherein the support element (100) is rigid.

4. The contouring system of any one of claims 1 to 3, comprising a plurality of contouring units (200), at least one of which differs from one or more of the other contouring units in any one or more of the following features: size, shape, colour, materials, and compressibility characteristics.

5. The contouring system of claim 4, wherein the contouring units (200) having the same compressibility characteristics are also the same shape or colour or both.

6. The contouring system of any one of the preceding claims, wherein one or more stabilisers (400) are located between layers of the contouring units (200).

7. The contouring system of any one of the preceding claims and attached to a backrest of a wheelchair.

## Patentansprüche

1. Einstellbares Rückenlehnenkontursystem zur Verwendung in einem Stuhl, wobei das Kontursystem Folgendes umfasst:
ein Stützelement (100), das eine Kontaktfläche (110) umfasst, die eine Vielzahl von Klett-Befestigungselementen umfasst; und
einen Satz aus zumindest zwei Kontureinheiten (200), wobei jede Kontureinheit einen Körper umfasst, der eine erste Fläche (211) und eine entgegengesetzte zweite Fläche (212) umfasst, wobei jede der ersten und der zweiten Fläche Klett-Befestigungselemente umfassen und die ferner eine oder mehrere Seiten umfassen, die einen Umfang der Kontureinheit definieren;
wobei eine Seite zumindest einer der Kontureinheiten durch eine perforierte Verbindung an einer Seite zumindest einer anderen Kontureinheit des Satzes angebracht ist, die es den Kontureinheiten ermöglicht, voneinander getrennt zu werden;
wobei die Kontureinheiten jeweils an gewünschten Positionen auf der Kontaktfläche (110) lösbar an der Kontaktfläche (110) anbringbar sind, um eine oder mehrere Lagen von Kontureinheiten (200) auszubilden;
**dadurch gekennzeichnet, dass** das Kontursystem auch zumindest ein elastisches Stabilisationselement (400) umfasst, das ausgelegt ist, um zwischen oder über zumindest zwei der Kontureinheiten (200) hinweg angeordnet zu sein und ausgelegt ist, um an jede der zumindest zwei Kontureinheiten angebracht zu sein, wobei jedes Stabilisationselement eine erste Fläche und eine entgegengesetzte zweite Fläche umfasst und wobei die erste Fläche Klett-Befestigungselemente umfasst und die zweite Fläche Klett-Befestigungselemente umfasst, um eine der Kontureinheiten (200) lösbar an einer weiteren der Kontureinheiten (200) oder an der Kontaktfläche (110) anzubringen, um die Lagen der Kontureinheiten in einer gewünschten Position auf dem Stützelement (100) zu halten.

2. Kontursystem nach Anspruch 1, wobei jede Kontureinheit (200) eine Vielzahl von Belüftungslöchern umfasst.

3. Kontursystem nach Anspruch 1 oder 2, wobei das Stützelement (100) starr ist.

4. Kontursystem nach einem der Ansprüche 1 bis 3, das eine Vielzahl von Kontureinheiten (200) umfasst, von denen sich zumindest eine von einer oder mehreren der anderen Kontureinheiten hinsichtlich eines beliebigen oder mehrerer der folgenden Merkmale unterscheidet: Größe, Form, Farbe, Materialien und Komprimierbarkeitseigenschaften.

5. Kontursystem nach Anspruch 4, wobei die Kontureinheiten (200), die dieselben Komprimierbarkeitseigenschaften aufweisen, auch dieselbe Form oder Farbe oder beides aufweisen.

6. Kontursystem nach einem der vorangegangenen Ansprüche, wobei ein oder mehrere Stabilisationselemente (400) zwischen Lagen der Kontureinheiten (200) angeordnet sind.

7. Kontursystem nach einem der vorangegangenen Ansprüche und das an der Rückenlehne eines Rollstuhls angebracht ist.

## Revendications

1. Système de profilage de dossier ajustable destiné à être utilisé dans une chaise, le système de profilage comprenant :
un élément de support (100) comprenant une surface de contact (110) comprenant une pluralité d'attaches à crochets ou à boucles ; et
un ensemble d'au moins deux unités de profilage (200), chaque unité de profilage comprenant un corps comprenant une première surface (211) et une seconde surface opposée (212), chacune des première et seconde surfaces comprenant des attaches à crochets ou à boucles, et comprenant en outre un ou plusieurs côtés qui définissent une périphérie de l'unité de profilage ;
dans lequel un côté d'au moins l'une des unités de profilage est attaché à un côté d'au moins une autre unité de profilage de l'ensemble par une connexion perforée qui permet aux unités de profilage d'être détachées les unes des autres ;
dans lequel les unités de profilage peuvent chacune être fixées de manière amovible à la surface de contact (110) à des emplacements souhaités sur la surface de contact (110) pour former une ou plusieurs couches d'unités de profilage (200) ;
**caractérisé en ce que** le système de profilage comprend également au moins un stabilisateur flexible (400) configuré pour être situé entre ou à travers au moins deux des unités de profilage (200) et configuré pour se fixer à chacune des au moins deux unités de profilage, dans lequel chaque stabilisateur comprend une première surface et une seconde surface opposée et dans lequel la première surface comprend des attaches à crochets ou à boucles et la seconde surface comprend des attaches à crochets ou à boucles pour fixer de manière amovible l'une des unités de profilage (200) à une autre des unités de profilage (200) ou à la surface de contact (110) afin de maintenir les unités de profilage en couches dans une position souhaitée sur l'élément de support (100).

2. Système de profilage selon la revendication 1, dans lequel chaque unité de profilage (200) comprend une pluralité de trous d'aération.

3. Système de profilage selon la revendication 1 ou 2, dans lequel l'élément de support (100) est rigide.

4. Système de profilage selon l'une quelconque des revendications 1 à 3, comprenant une pluralité d'unités de profilage (200), dont au moins l'une diffère d'une ou plusieurs des autres unités de profilage en ce qui concerne une ou plusieurs quelconques des propriétés suivantes : taille, forme, couleur, matériaux, et caractéristiques de compressibilité.

5. Système de profilage selon la revendication 4, dans lequel les unités de profilage (200) ayant les mêmes caractéristiques de compressibilité sont également de la même forme ou de la même couleur ou les deux.

6. Système de profilage selon l'une quelconque des revendications précédentes, dans lequel un ou plusieurs stabilisateurs (400) sont situés entre des couches des unités de profilage (200).

7. Système de profilage selon l'une quelconque des revendications précédentes et fixé à un dossier d'un fauteuil roulant.
